(19) Europäisches Patentamt European Patent Office Office européen des brevets

(11) **EP 4 107 878 B1**

(12) **EUROPEAN PATENT SPECIFICATION**

(45) Date of publication and mention of the grant of the patent:
**24.12.2025 Bulletin 2025/52**

(21) Application number: **20712926.3**

(22) Date of filing: **19.03.2020**

(51) International Patent Classification (IPC):
*H04B 10/2513* (2013.01)    *H04B 10/61* (2013.01)

(52) Cooperative Patent Classification (CPC):
**H04B 10/6161; H04B 10/25137;** H04B 2210/25

(86) International application number:
**PCT/EP2020/057549**

(87) International publication number:
**WO 2021/185445 (23.09.2021 Gazette 2021/38)**

(54) **DETERMINING CHROMATIC DISPERSION IN AN OPTICAL LINK**

BESTIMMUNG DER CHROMATISCHEN DISPERSION IN EINER OPTISCHEN VERBINDUNG

DÉTERMINATION DE LA DISPERSION CHROMATIQUE DANS UNE LIAISON OPTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.12.2022 Bulletin 2022/52**

(73) Proprietor: **Huawei Technologies Co., Ltd. Shenzhen, Guangdong 518129 (CN)**

(72) Inventors:
• **STOJANOVIC, Nebojsa**
  **80992 Munich (DE)**
• **XIE, Changsong**
  **80992 Munich (DE)**
• **WEI, Jinlong**
  **80992 Munich (DE)**

(74) Representative: **Gill Jennings & Every LLP**
  **The Broadgate Tower**
  **20 Primrose Street**
  **London EC2A 2ES (GB)**

(56) References cited:
JP-A- 2010 010 752    US-B2- 10 523 323

**Description**

TECHNICAL FIELD

The present disclosure relates generally to the field of optical communication; and more specifically, to methods and apparatus for determining chromatic dispersion in an optical link.

BACKGROUND

With the growing bandwidth demands in different optical networks, for example, from long-haul to metro, and even short-haul transmission systems, existing telecommunication infrastructure faces strong stress to upgrade its transmission capacity in a cost-effective manner. It is usually preferred to increase the capacity of existing optical links (e.g. fibre-optic links) instead of installation of new communication links that require huge investments. It is known that capacity of the optical links may be enhanced by using different multiplexing techniques, such as a wavelength division multiplexing (WDM) transmission technique, an optical orthogonal frequency-division multiplexing (O-OFDM) transmission technique, a space-division multiplexing (SDM) transmission technique, a hybrid multiplexing transmission technique, and the like. Typically, for the metropolitan area networks (e.g. ranging from 40 km to 320 km), mostly installed optical links are based on 10 Gigabytes per second (Gb/s) data rate optical intensity modulation direct detection (IMDD) WDM transmission. However, it is estimated that the next generation metropolitan area networks will require greater than 50 Gb/s or 100 Gb/s data rate IMDD WDM optical transmission.

Currently, one of the major performance limits that arises in optical communication is chromatic dispersion in the optical links. The chromatic dispersion in an optical link causes a pulse broadening and degrades the transmission quality, limiting the distance a digital signal can travel before needing regeneration or compensation. Traditionally, an optical domain chromatic dispersion compensation may be performed, for example, using dispersion compensation fibres. However, the optical domain chromatic dispersion compensation is associated with high cost, optical loss, and optical link configuration complexity. Thus, instead of optical domain chromatic dispersion compensation, electrical domain compensation is considered promising to handle the technical problem of chromatic dispersion by leveraging digital signal processing. However, before electrical domain compensation of chromatic dispersion is made, it is required to acquire the channel chromatic dispersion (i.e. how much chromatic dispersion needs to be compensated), which is also known as chromatic dispersion estimation.

Currently, certain attempts have been made in order to estimate chromatic dispersion for electrical domain compensation. However, conventional methods and systems for chromatic dispersion estimation are inaccurate, and the accuracy significantly reduces with the deceasing length of the optical link, and becomes even unfeasible for metro or short-haul transmission systems. For example, in some conventional methods, such as a conventional signal spectral dips-based approach for a direct detection system, it is required that the fibre-optic link must be long enough to generate a large number of frequency dips for chromatic dispersion estimation. However, for data centres interconnects or metro networks (or even access networks, or other short-haul transmission systems), the fibre-optic link length typically ranges from 80 km to a few hundred km, which may not generate significant frequency dips depending on signal bandwidth, thereby either failing to estimate chromatic dispersion estimation, or the estimation, if made, is inaccurate. In another example, in some conventional methods, for example, in a peak-to-average power ratio (PAPR) based approach, a blind scan of chromatic dispersion values is performed in a coherent receiver (i.e. a conventional coherent system) and the peak-to-average power ratio is then monitored. The blind scan results in very high complexity, which is not desirable. In yet another example, some conventional methods require specific data to be inserted into user communicated data (i.e. actual user data), where a time delay is detected between the inserted data at different frequencies. The insertion of such additional data (i.e. the specific data) into the user communication data causes computational overhead. For example, extra computational resources (e.g. extra signal processing effort for synchronization) is required so that specific data can be captured at receiver side, which is further undesirable. JP 2010 010752 describes an automatic chromatic dispersion compensation method and system of an optical signal.

Therefore, in light of the foregoing discussion, there exists a need to overcome the drawbacks associated with the conventional chromatic dispersion estimation and compensation techniques.

SUMMARY

The present disclosure seeks to provide a method, an apparatus, and a computer program product for determining chromatic dispersion in an optical link. The present disclosure seeks to provide a solution to the existing problem of inaccurate chromatic dispersion estimation, which results in improper handling of chromatic dispersion in optical links, for example, for metropolitan area networks. An aim of the present disclosure is to provide a solution that overcomes at least partially the problems encountered in prior art, and provides improved method and apparatus that is able to efficiently and accurately determine chromatic dispersion in an optical link irrespective of the length of the optical link, and thus reliably handle the chromatic dispersion in the optical link for low-complexity electrical domain compensation.

The object of the present disclosure is achieved by the solutions provided in the enclosed independent claims. Advantageous implementations of the present disclosure are further defined in the dependent claims.

In a first aspect, the present disclosure provides a method for determining chromatic dispersion in an optical link at an optical signal receiving apparatus. The method comprises receiving, by the optical signal receiving apparatus, a signal via the optical link from an optical signal transmitting apparatus. The method further comprises estimating, by the optical signal receiving apparatus, a first chromatic dispersion of the received signal based on at least one frequency dip in a power spectrum associated with the received signal, wherein the at least one frequency dip is generated by the optical link. The method further comprises providing, by the optical signal receiving apparatus, a set of chromatic dispersion values, to a chromatic dispersion generation circuit to obtain a set of signals. The method further comprises determining, by the optical signal receiving apparatus, a second chromatic dispersion based on the provided set of chromatic dispersion values, the power spectrum associated with the received signal, and a set of power spectrums associated with the obtained set of signals.

The method of the first aspect enables an accurate determination of the chromatic dispersion in the optical link using minimum number of frequency dips, such as even one or two frequency dips, in the power spectrum associated with the received signal. Thus, the method is suitable for the determination of the chromatic dispersion even for short length optical links, such as the optical links in metropolitan area networks (MANs) or access networks. Moreover, the method can be implemented with low level of complexity as the number of frequency dips required in the power spectrum is significantly less as compared to conventional methods. Moreover, no training or special data is present in the received signal for the determination of the chromatic dispersion in the optical link, thereby reducing complexity and computational load. The use of the provided set of chromatic dispersion values, the power spectrum associated with the received signal, and the set of power spectrums associated with the obtained set of signals, enables an accurate determination of the chromatic dispersion (i.e. the second chromatic dispersion). In general, the method employs electric domain compensation, which is easier to implement and is cost-effective as compared to conventional optical domain compensation. Moreover, the determined chromatic dispersion can be provided to the optical signal transmitting apparatus for a pre-compensation or is used by the optical signal receiving apparatus itself for a post-compensation of the determined chromatic dispersion, thereby improving overall transmission quality and transmission capacity of the optical link in a cost-effective manner.

In an implementation form, the method further comprises selecting, by the optical signal receiving apparatus, a value of pre-compensated chromatic dispersion associated with the received signal for the estimation of the first chromatic dispersion of the received signal.

The selection of the value of pre-compensated chromatic dispersion associated with the received signal enables estimation of the first chromatic dispersion (e.g. a rough chromatic dispersion) of the received signal. Alternatively stated, in this implementation, the method employs a single chromatic dispersion pre-compensation for the accurate determination of the second chromatic dispersion in the optical link.

In an implementation form, the method further comprises generating, by the optical signal receiving apparatus, the power spectrum for the received signal based on a conversion of the received signal to a frequency domain, wherein the generated power spectrum is a distribution of a power spectral density of the received signal in the frequency domain, and wherein each of the set of power spectrums is a distribution of a power spectral density in the frequency domain corresponding to each of the obtained set of signals.

The power spectrum (e.g. a distribution of power spectral density) for the received signal and the power spectrums corresponding to each of the obtained set of signals represents spectral power fading information, which enables to accurately determine the second chromatic dispersion in the optical link.

In an implementation form, the determining of the second chromatic dispersion comprises determining, by the optical signal receiving apparatus, a set of slopes from the set of power spectrums associated with the obtained set of signals.

The determination of the set of slopes from the set of power spectrums provides a basis to identify a slope (from the set of slopes) having a least slope difference when compared to a slope associated with the power spectrum of the received signal. The slope having the least slope difference is then used to determine an accurate chromatic dispersion (i.e. the second chromatic dispersion).

In an implementation form, the determining of the second chromatic dispersion further comprises comparing, by the optical signal receiving apparatus, a slope associated with the power spectrum of the received signal with each slope of the set of slopes associated with the set of power spectrums of the obtained set of signals.

The comparison provides a spectral domain amplitude difference (i.e. a slope difference) before applying chromatic dispersion and after applying chromatic dispersion (i.e. after applying the set of chromatic dispersion values to obtain the set of signals). Such companion enables to identify a slope (from the set of slopes) having a least slope difference (e.g. a minimum absolute difference), which in turn enables to accurately determine the second chromatic dispersion in a low-complexity manner. For example, the second chromatic dispersion is one of the set of chromatic dispersion values that is associated with the identified slope having the least slope difference.

In an implementation form, the determining of the second chromatic dispersion further comprises identifying, by the optical signal receiving apparatus, based on the comparison, a slope from the set of slopes having a least slope difference with the slope associated the received signal, wherein the determined second chromatic dispersion is one chromatic dispersion value from the provided set of chromatic dispersion values that corresponds to the identified slope having the least slope difference.

By virtue of the identification of the slope having the least slope difference, an accurate determination of the chromatic dispersion (i.e. the second chromatic dispersion) is made without the need of any training or special data in the received signal. Moreover, the method can be implemented with low level of complexity as a blind scan of chromatic dispersion values is not required.

In an implementation form, the chromatic dispersion generation circuit is provided at any one of: the optical signal receiving apparatus; or the optical signal transmitting apparatus when the received signal is provided as a feedback to the optical signal transmitting apparatus.

The method provides a flexibility in terms of implementation of the chromatic dispersion generation circuit and is suitable for both direct detection systems (for pre-compensation) and coherent detection systems (for pre-compensation or post-compensation) with increased accuracy.

In an implementation form, the method further comprises providing, by the optical signal receiving apparatus, the determined second chromatic dispersion to a chromatic dispersion compensation circuit, wherein the determined second chromatic dispersion is used by the chromatic dispersion compensation circuit for a pre-compensation of the chromatic dispersion in the optical link, wherein the chromatic dispersion compensation circuit is provided at the optical signal transmitting apparatus for the pre-compensation.

The pre-compensation of the chromatic dispersion at the optical signal transmitting apparatus improves the transmission quality of the optical link, thereby increasing the transmission capacity of the optical link.

In an implementation form, the method further comprises using, by a chromatic dispersion compensation circuit of the optical signal receiving apparatus, the determined second chromatic dispersion for a post-compensation of the chromatic dispersion in the optical link.

As the determined second chromatic dispersion is accurate, the post-compensation of the chromatic dispersion in the optical link at the optical signal receiving apparatus is effective and significantly improves the bit error rate performance and optical signal to noise ratio (OSNR) performance of the optical signal receiving apparatus, thereby facilitating almost error-free data recovery at the optical signal receiving apparatus.

In an implementation form, the method further comprises selecting, by the optical signal receiving apparatus, at least one of a first operational mode or a second operational mode of a plurality of operational modes for determination of the chromatic dispersion in the optical link, wherein at least operations that comprises the estimating of the first chromatic dispersion, the providing of the set of chromatic dispersion values, and the determining of the second chromatic dispersion are executed based on the selection of the first operational mode.

The method provides a flexibility to select between the first operational mode or the second operational mode to accurately determine the second chromatic dispersion. Both the first operational mode and the second operational mode are low-complexity approaches for determination of an accurate chromatic dispersion in the optical link.

In an implementation form, based on the selection of the second operational mode, the method further comprises selecting, by the optical signal receiving apparatus in a first iteration of a plurality of iterations, at least two compensated chromatic dispersion values for a new signal transmitted by the optical signal transmitting apparatus, wherein the at least two-compensated chromatic dispersion values are at least one of: pre-compensated chromatic dispersion values, post-compensated chromatic dispersion values. The method further comprises obtaining, by the optical signal receiving apparatus in the first iteration, a first signal and a second signal based on the at least two compensated chromatic dispersion values.

The use of multiple compensated chromatic dispersion values in the second operational mode in order to determine the second chromatic dispersion further reduces the complexity and increases accuracy as compared to conventional methods, such as the conventional peak-to-average power ratio (PAPR) based approach.

In an implementation form, based on the selection of the second operational mode, the method further comprises generating, by the optical signal receiving apparatus in the first iteration, a first power spectrum associated with the first signal and a second power spectrum associated with the second signal. The method further comprises determining, by the optical signal receiving apparatus in the first iteration, a first set of frequency values that corresponds to frequency dips in the first power spectrum and a second set of frequency values that corresponds to frequency dips in the second power spectrum.

By virtue of the determination of the frequency dips in the first power spectrum and the second power spectrum (e.g. a power spectral density curve), an accurate determination of the chromatic dispersion (i.e. the second chromatic dispersion) is made without the need of any training or special data in the received signal. Moreover, the method can be implemented with low level of complexity as a blind scan of chromatic dispersion values is not required.

In an implementation form, based on the selection of the second operational mode, the method further comprises determining, by the optical signal receiving apparatus, in the plurality of iterations, a plurality of chromatic dispersion values based on the provided at least two compensated chromatic dispersion values, the determined first set of frequency values, and the determined second set of frequency values in each iteration of the plurality of iterations. The method further comprises eliminating, by the optical signal receiving apparatus, one or more chromatic dispersion values from the determined plurality of chromatic dispersion values that has a deviation greater than a defined threshold. The method further comprises determining, by the optical signal receiving apparatus, a representative chromatic dispersion value that is representative of the determined plurality of chromatic dispersion values post the elimination.

By iteratively eliminating the measurements of the one or more chromatic dispersion values that show large deviations (i.e. the deviation greater than the defined threshold) relative to average, the chances of errors in determination of the second chromatic dispersion (i.e. a final chromatic dispersion) is reduced. The determined representative chromatic dispersion value that is representative (e.g. an average or a mean) of the determined plurality of chromatic dispersion values post the elimination, is potentially an accurate chromatic dispersion. The averaging further increases the accuracy in the determination of the chromatic dispersion in the optical link.

In an implementation form, the method further comprises providing, based on the selection of the second operational mode, the determined representative chromatic dispersion value to a chromatic dispersion compensation circuit, wherein the determined representative chromatic dispersion value is used by the chromatic dispersion compensation circuit for at least one of: a post-compensation of the chromatic dispersion in the optical link at the optical signal receiving apparatus in a coherent detection system with an in-phase/quadrature modulator, or a pre-compensation of the chromatic dispersion in the optical link at the optical signal transmitting apparatus for a direct detection system or the coherent detection system independent of the in-phase/quadrature modulator.

The pre-compensation or the post-compensation of the chromatic dispersion significantly increases the transmission quality of the optical link, thereby increasing the distance the received signal can travel before needing regeneration or further compensation. Moreover, the pre-compensation or the post-compensation of the chromatic dispersion significantly improves capacity of an existing optical link in a cost-effective manner.

In a comparative example, the present disclosure provides an optical signal receiving apparatus for determining chromatic dispersion in an optical link. The optical signal receiving apparatus comprises a control circuitry that is configured to receive a signal via the optical link from an optical signal transmitting apparatus. The control circuitry is further configured to estimate a first chromatic dispersion of the received signal based on at least one frequency dip in a power spectrum associated with the received signal, wherein the at least one frequency dip is generated by the optical link.

Moreover, the control circuitry is configured to provide, based on the estimated first chromatic dispersion, a set of chromatic dispersion values to a chromatic dispersion generation circuit to obtain a set of signals. Furthermore, control circuitry is configured to determine a second chromatic dispersion based on the provided set of chromatic dispersion values, the power spectrum associated with the received signal, and a set of power spectrums associated with the obtained set of signals.

In further implementation forms of the optical signal receiving apparatus of the above comparative example, the control circuitry is configured to perform the features of the implementation forms of the method according to the first aspect. Hence, implementation forms of the optical signal receiving apparatus comprise the feature(s) of the corresponding implementation form of the method of the first aspect.

The optical signal receiving apparatus of the above comparative example achieves all the advantages and effects of the method of the first aspect.

In a second aspect, the present disclosure provides computer program product comprising a non-transitory computer-readable storage medium having computer-readable instructions stored thereon, the computer-readable instructions being executable by a computerised device comprising processing hardware to execute the aforementioned method of the first aspect.

The computer program product of the second aspect achieves all the advantages and effects of the method of the first aspect.

It has to be noted that all devices, elements, circuitry, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof. It will be appreciated that features of the present disclosure are susceptible to being combined in various combinations without departing from the scope of the present disclosure as defined by the appended claims.

Additional aspects, advantages, features and objects of the present disclosure would be made apparent from the drawings and the detailed description of the illustrative implementations construed in conjunction with the appended claims that follow.

BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those in the art will understand that the drawings are not to scale. Wherever possible, like elements have been indicated by identical numbers.

Embodiments of the present disclosure will now be described, by way of example only, with reference to the following diagrams wherein:

FIG. 1       is a flowchart of a method for determining chromatic dispersion in an optical link, in accordance with an embodiment of the present disclosure;

FIG. 2A     is a network environment of a system with an optical signal transmitting apparatus and an optical signal receiving apparatus, in accordance with an embodiment of the present disclosure;

FIG. 2B     is a block diagram that illustrates various exemplary components of an optical signal transmitting apparatus, in accordance with an embodiment of the present disclosure;

FIG. 2C     is a block diagram that illustrates various exemplary components of an optical signal receiving apparatus, in accordance with an embodiment of the present disclosure;

FIG. 3A     is an illustration of power spectrums of signals before and after providing a set of chromatic dispersion values, in accordance with an embodiment of the present disclosure;

FIG. 3B     is a graphical representation that illustrates a parabolic curve related to slope differences, in accordance with an embodiment of the present disclosure;

FIG. 4A     is a network environment of an exemplary direct detection system for pre-compensation of chromatic dispersion, in accordance with an embodiment of the present disclosure;

FIG. 4B     is a network environment of an exemplary coherent detection system for post-compensation of chromatic dispersion, in accordance with an embodiment of the present disclosure;

FIG. 5A     is a graphical representation that illustrates comparative results of measurements of pre-compensated chromatic dispersion in a direct detection system, in accordance with an embodiment of the present disclosure;

FIG. 5B     is a graphical representation of measurements of chromatic dispersion using multiple pre-compensations in an exemplary direct detection system, in accordance with another embodiment of the present disclosure;

FIG. 5C     is a graphical representation of measurements of compensated chromatic dispersion in an exemplary coherent detection system, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practicing the present disclosure are also possible.

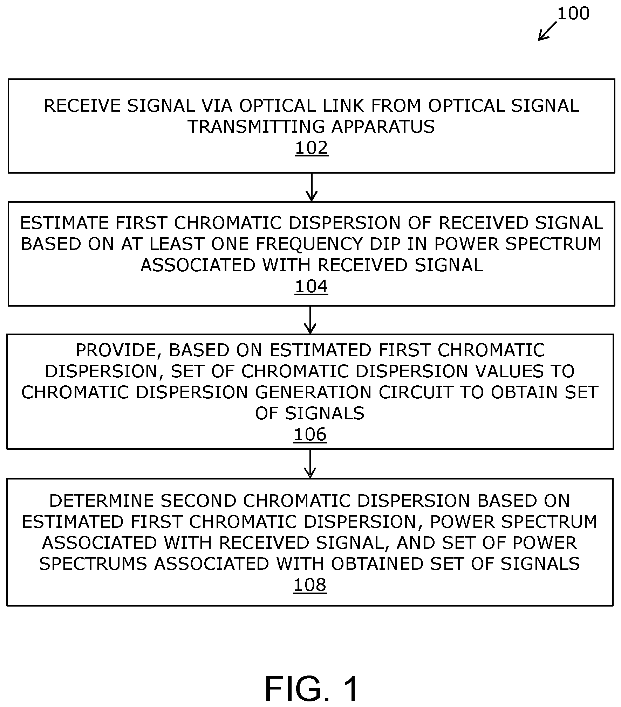

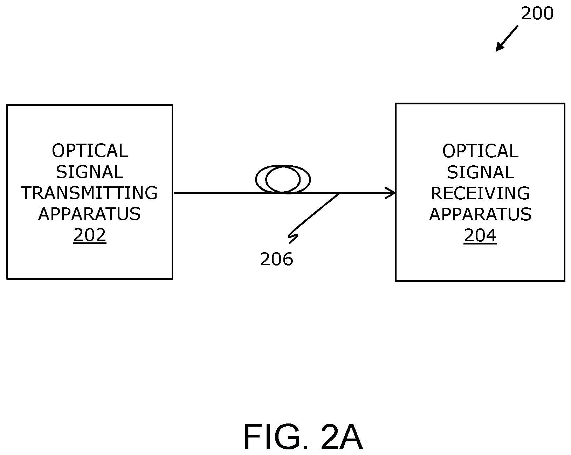

FIG. 1 is a flowchart of a method **100** for determining chromatic dispersion in an optical link at an optical signal receiving apparatus, in accordance with an embodiment of the present disclosure. The method **100** is executed at an optical signal receiving apparatus described, for example, in FIG. 2A. The method **100** includes steps **102, 104, 106,** and **108.**

At step **102,** a signal is received by the optical signal receiving apparatus via an optical link from an optical signal transmitting apparatus. The received signal corresponds to an optical signal that is detected at the optical signal receiving apparatus, and is converted in digital domain. In an example, data is potentially communicated between two remotely located points (e.g. data centres) in a metropolitan area network in form of signals using an optical communication. Typically, an electrical signal is used to transmit the data. The electrical signal is first converted to an analogue signal and modulated at the optical signal transmitting apparatus, and then propagated as an optical signal via the optical link to the optical signal receiving apparatus. The transmitted optical signal usually suffers from chromatic dispersion when passed through the optical link. An accurate determination of such chromatic dispersion in the optical link is very useful as it improves overall transmission quality and increases the capacity of the optical link.

In accordance with an embodiment, the method **100** further comprises generating, by the optical signal receiving apparatus, a power spectrum for the received signal based on a conversion of the received signal to a frequency domain. The generated power spectrum is a distribution of a power spectral density (e.g. a power spectral density curve) of the received signal in the frequency domain. In an example, the conversion of the received signal into the frequency domain is potentially executed using Fourier transform, such as a Fast Fourier transform (FTT).

At step **104,** a first chromatic dispersion of the received signal is estimated by the optical signal receiving apparatus, based on at least one frequency dip in the power spectrum associated with the received signal.

Typically, chromatic dispersion causes distortion in the received signal. Thus, the digital information carried by the received signal may become erroneous. Therefore, in order to eliminate the chromatic dispersion in the received signal, the chromatic dispersion associated with the received signal needs to be determined.

In conventional methods and optical communication systems, it is required that the optical link (e.g. a fibre-optic link) must be long enough to generate a large number of frequency dips for chromatic dispersion estimation. However, for data centres interconnects or metro networks (or access networks, or other short-haul transmission systems), the optical link (e.g. a fibre-optic link) length typically ranges from 80 km to a few hundred km, which may not generate significant frequency dips depending on signal bandwidth, thereby either failing to estimate chromatic dispersion estimation, or the estimation, if made, is inaccurate. In contradiction to the conventional methods and optical communication systems, a minimum number of frequency dips, such as one or two frequency dips, in the power spectrum associated with the received signal, is sufficient to accurately determine the chromatic dispersion in the optical link using the disclosed method **100.** Thus, the method **100** is suitable for the determination of the chromatic dispersion irrespective of any length of the optical link. For example, the chromatic dispersion can be determined even for short length optical links, such as the optical links in metropolitan area networks or access networks.

Moreover, in order to determine an accurate chromatic dispersion for the received signal, the first chromatic dispersion is estimated by the optical signal receiving apparatus. The first chromatic dispersion is, for example, a rough estimate (or an initial estimate) of the chromatic dispersion that is utilised to determine the actual chromatic dispersion associated with the received signal. Notably, the power spectrum of the received signal represents a distribution of power of the received signal into frequency components. The at least one frequency dip in the power spectrum associated with the received signal is used for estimating the first chromatic dispersion. As the received signal fades due to chromatic dispersion, a smaller number of frequency dips are observed in the power spectrum. Thus, information related to the at least one frequency dip in the power spectrum associated with the received signal is useful in estimation of the first chromatic dispersion associated with the received signal. The estimation of the first chromatic dispersion of the received signal by the optical signal receiving apparatus, is further described in detail, for example, in FIG. 2A.

In accordance with an embodiment, the method **100** further comprises selecting, by the optical signal receiving apparatus, a value of pre-compensated chromatic dispersion associated with the received signal for the estimation of the first chromatic dispersion of the received signal. In an example, a single chromatic dispersion value (such as a value of pre-compensated chromatic dispersion "$D_{com}$"). As most installed optical links (e.g. a fibre-optic link) has a positive chromatic dispersion, the value of the pre-compensated chromatic dispersion associated with the received signal (i.e. the value of $D_{com}$) is selected in in a way that it is positive and large enough to make sure the received signal has at least one, specifically more than one frequency dips.

At step **106,** a set of chromatic dispersion values are provided by the optical signal receiving apparatus to a chromatic dispersion generation circuit, based on the estimated first chromatic dispersion, to obtain a set of signals. The chromatic dispersion generation circuit is configured to receive the set of chromatic dispersion values from the optical signal receiving apparatus to generate the set of signals. The set of chromatic dispersion values are selected based on the estimated first chromatic dispersion, and further provided to the chromatic dispersion generation circuit. In an example, the set of chromatic dispersion values are selected close to a value of the estimated first chromatic dispersion. The set of signals are obtained based on the provided set of chromatic dispersion values. Furthermore, a set of power spectrums associated with the set of signals is obtained. In an implementation, the chromatic dispersion generation circuit is provided at the optical signal receiving apparatus. In another implementation, the chromatic dispersion generation circuit is provided at the optical signal transmitting apparatus when the received signal is provided as a feedback to the optical signal transmitting apparatus.

At step **108,** a second chromatic dispersion is determined by the optical signal receiving apparatus, based on the provided set of chromatic dispersion values, the power spectrum associated with the received signal, and a set of power spectrums associated with the obtained set of signals. The second chromatic dispersion is the accurate chromatic dispersion determined using only one or two frequency dips from the power spectrum of the received signal. In an example, the power spectrum of the received signal (e.g. a power spectral density curve of the received signal) and the set of power spectrums (e.g. power spectral density curves of the obtained set of signals) correspond to spectral power fading information. Based on the first chromatic dispersion, only three chromatic dispersion values (of the provided set of chromatic dispersion values) are potentially sufficient to accurately determine the second chromatic dispersion (and a blind scan of all the chromatic dispersion values is not required). Thus, the determination of second chromatic dispersion is a low-complexity process.

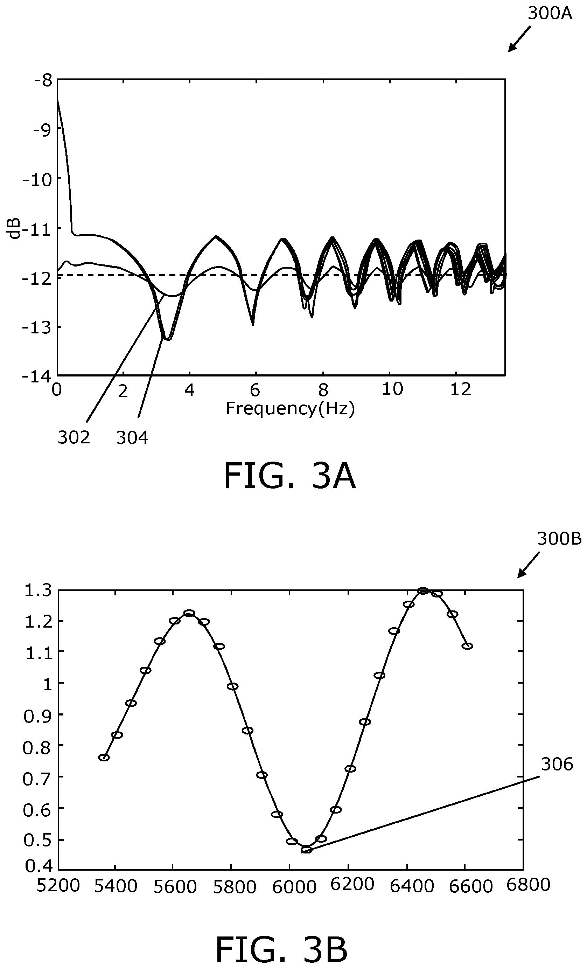

In accordance with an embodiment, the determining of the second chromatic dispersion comprises determining, by the optical signal receiving apparatus, a set of slopes from the set of power spectrums associated with the obtained set of signals. Each of the set of power spectrums is a distribution of a power spectral density (e.g. a power spectral density curve) in the frequency domain corresponding to each of the obtained set of signals. Similarly, a slope associated with the power spectrum of the received signal is also determined. The determining of the second chromatic dispersion further comprises comparing, by the optical signal receiving apparatus, a slope associated with the power spectrum of the received signal with each slope of the set of slopes associated with the set of power spectrums of the obtained set of signals. A comparison of the power spectrum associated with the received signal and power spectrums associated with the set of signals is shown and described, for example, in FIG. 3A. The determining of the second chromatic dispersion further comprises identifying, by the optical signal receiving apparatus, based on the comparison, a slope from the set of slopes having a least slope difference with the slope associated the received signal. The determined second chromatic dispersion is one chromatic dispersion value from the provided set of chromatic dispersion values that corresponds to the identified slope having the least slope difference. The least slope difference implies that a difference between the first chromatic dispersion and the chromatic dispersion value from the set of chromatic dispersion values having the least slope difference is minimum. Thus, the second chromatic dispersion is selected as the chromatic dispersion value from the set of chromatic dispersion values that is associated with the identified slope having the least slope difference. An exemplary identified slope having the least slope difference, is further described, for example, in FIG. 3B.

In accordance with an embodiment, the method **100** further comprises providing, by the optical signal receiving apparatus, the determined second chromatic dispersion to a chromatic dispersion compensation circuit. In an implementation, the determined second chromatic dispersion is used by the chromatic dispersion compensation circuit for a pre-compensation of the chromatic dispersion in the optical link. In such implementation, the chromatic dispersion compensation circuit is provided at the optical signal transmitting apparatus for the pre-compensation. In another implementation, the chromatic dispersion compensation circuit is provided at the optical signal receiving apparatus. In such implementation, the method **100** further comprises using, by the chromatic dispersion compensation circuit of the optical signal receiving apparatus, the determined second chromatic dispersion for a post-compensation of the chromatic dispersion in the optical link.

In accordance with an embodiment, a plurality of operational modes is provided at the optical signal receiving apparatus for determination of the chromatic dispersion in the optical link. The method **100** further comprises selecting, by the optical signal receiving apparatus, at least one of a first operational mode or a second operational mode of the plurality of operational modes for determination of the chromatic dispersion in the optical link. At least operations that comprises the estimating of the first chromatic dispersion, the providing of the set of chromatic dispersion values, and the determining of the second chromatic dispersion are executed based on the selection of the first operational mode. The plurality of operational modes represents different approaches for determination of an accurate chromatic dispersion in the optical link. The second operational mode is beneficial when two frequency dips used in the first operational mode are very close to each other in the power spectrum. The first operational mode involves use of one chromatic dispersion compensation (i.e. selects only one pre-compensated chromatic dispersion value). The second operational mode involves use of multiple chromatic dispersion compensations (e.g. two or more pre-compensation or post-compensation values) in an iterative processing for determination of the accurate chromatic dispersion in the optical link.

In accordance with an embodiment, based on the selection of the second operational mode, the method **100** further comprises selecting, by the optical signal receiving apparatus in a first iteration of a plurality of iterations, at least two-compensated chromatic dispersion values for a new signal transmitted by the optical signal transmitting apparatus. The at least two-compensated chromatic dispersion values are at least one of: pre-compensated chromatic dispersion values or post-compensated chromatic dispersion values. Similar to the selection criteria of the value of the pre-compensated chromatic dispersion associated with the received signal (i.e. the value of $D_{com}$) in the first operational mode, the at least two-compensated chromatic dispersion values (e.g. $D_{com,m}$ and $D_{com,n}$) are selected in in a way that the values are positive and large enough to make sure the received signal has more than one frequency dips. The selected values (i.e. the two-compensated chromatic dispersion values) are different. An example of the plurality of iterations performed in the second operational mode to determine an accurate chromatic dispersion, is further described in detail, for example, in FIG. 2A.

In accordance with an embodiment, based on the selection of the second operational mode, the method **100** further comprises obtaining, by the optical signal receiving apparatus in the first iteration, a first signal and a second signal based on the at least two-compensated chromatic dispersion values. In the second operational mode, the method **100** further comprises generating, by the optical signal receiving apparatus in the first iteration, a first power spectrum associated with the first signal and a second power spectrum associated with the second signal. Based on the selection of the second operational mode, the method **100** further comprises determining, by the optical signal receiving apparatus in the first iteration, a first set of frequency values that corresponds to frequency dips in the first power spectrum and a second set of frequency values that corresponds to frequency dips in the second power spectrum.

In accordance with an embodiment, based on the selection of the second operational mode, the method **100** further comprises determining, by the optical signal receiving apparatus, in the plurality of iterations, a plurality of chromatic dispersion values based on the provided at least two compensated chromatic dispersion values, the determined first set of frequency values, and the determined second set of frequency values in each iteration of the plurality of iterations. In the second operational mode, the method **100** further comprises eliminating, by the optical signal receiving apparatus, one or more chromatic dispersion values from the determined plurality of chromatic dispersion values that has a deviation greater than a defined threshold. In the second operational mode, the method **100** further comprises determining, by the optical signal receiving apparatus, a representative chromatic dispersion value that is representative (e.g. an average or a mean) of the determined plurality of chromatic dispersion values post the elimination.

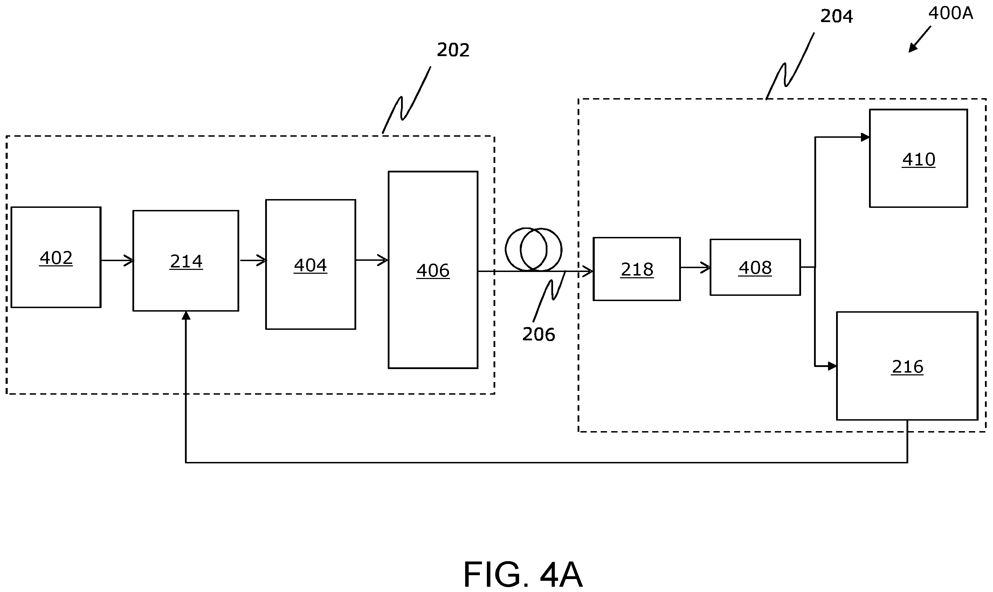

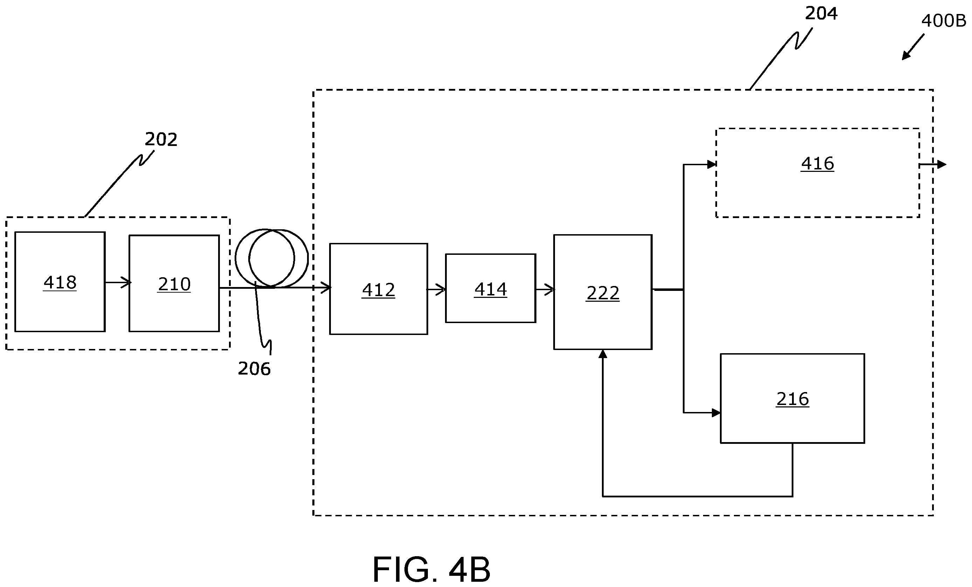

In accordance with an embodiment, the method **100** further comprises providing, based on the selection of the second operational mode, the determined representative chromatic dispersion value to a chromatic dispersion compensation circuit. In an implementation, the determined representative chromatic dispersion value is used by the chromatic dispersion compensation circuit for a post-compensation of the chromatic dispersion in the optical link at the optical signal receiving apparatus in a coherent detection system with an in-phase/quadrature modulator. In another implementation, the determined representative chromatic dispersion value is used by the chromatic dispersion compensation circuit for a pre-compensation of the chromatic dispersion in the optical link at the optical signal transmitting apparatus for a direct detection system or the coherent detection system independent of the in-phase/quadrature modulator. An exemplary direct detection system for pre-compensation of chromatic dispersion, is further described, for example, in FIG. 4A. An exemplary coherent detection system for post-compensation of chromatic dispersion, is further described, for example, in FIG. 4B.

The steps **102, 104, 106** and **108** are only illustrative and other alternatives can also be provided where one or more steps are added, one or more steps are removed, or one or more steps are provided in a different sequence without departing from the scope of the claims herein.

FIG. 2A is a network environment of a system **200** with an optical signal transmitting apparatus and an optical signal receiving apparatus, in accordance with an embodiment of the present disclosure. With reference to FIG. 2A, there is shown a network environment of the system **200** that includes an optical signal transmitting apparatus **202** and an optical signal receiving apparatus **204**. There is further shown an optical link **206** between the optical signal transmitting apparatus **202** and the optical signal receiving apparatus **204**. The optical signal receiving apparatus **204** is communicatively coupled to the optical signal transmitting apparatus **202** via the optical link **206.**

The optical signal transmitting apparatus **202** include suitable logic, circuitry, interfaces and/or code that is configured to transmit information in the form of an optical signal to the optical signal receiving apparatus **204** via the optical link **206**. Examples of the optical signal transmitting apparatus **202** include, but is not limited to an optical transmitter, a transceiver, or a fibre optic transmitter.

The optical signal receiving apparatus **204** include suitable logic, circuitry, interfaces and/or code that is configured to receive the optical signal via the optical link **206** and convert the optical signal into the electric signal. Examples of the optical signal receiving apparatus **204** include, but is not limited to an optical receiver, a transceiver, or a fibre optic transmitter.

The optical link **206** is a communication link that comprises a single end-to-end optical circuit, which provides a data connection medium between two points. Examples of the optical link **206** include, but is not limited to an optical fibre (such as multimode optical fibre, a single mode optical fibre, or a plastic optical fibre), or an active optical cable (AOC), or a full duplex optical link.

In operation, the optical signal transmitting apparatus **202** is configured to transmit input data in the form of an optical signal to the optical signal receiving apparatus **204,** via the optical link **206**. Typically, the input data in a digital domain (represents an electrical signal) is converted to an analogue signal (e.g. using a digital-to-analogue converter), and modulated (e.g. into a carrier wave) to be propagated as the optical signal (e.g. a light beam) via the optical link **206.** The system **200** including the optical signal transmitting apparatus **202** and the optical signal receiving apparatus **204** is independent of modulation (or demodulation) formats or techniques, and thus is suited to use any kind of modulation (e.g. WDM, O-OFDM, SDM, and the like).

In accordance with an embodiment, the optical signal receiving apparatus **204** is configured to select at least one of a first operational mode or a second operational mode of a plurality of operational modes for determination of the chromatic dispersion in the optical link **206.** The plurality of operational modes represents different approaches for determination of the chromatic dispersion in the optical link **206.** The first operational mode (i.e. a first approach of determination of the chromatic dispersion) includes do not require many frequency dips (at least one or two frequency dips is enough) to calculate an initial (a rough) chromatic dispersion. Thus, by use of the first operational mode, chromatic dispersion can be estimated even for the optical link **206** with shorter distances to cover metropolitan networks and even access networks depending on signal bandwidth. The first operational mode involves using a single chromatic dispersion pre-compensation on the received signal to determine an accurate chromatic dispersion, compensating the determined chromatic dispersion and then performing a square-law detection to derive original input data. In the first operational mode, a spectral domain amplitude difference is calculated based on a power spectrum of the received signal and power spectrums of a set of signals obtained based on an initially estimated chromatic dispersion on the received signal. The second operational mode represents a second approach for the determination of the chromatic dispersion in the optical link **206.** The second operational mode is beneficial when two frequency dips used in the first operational mode are very close to each other in the power spectrum. In certain scenarios, the close frequency dips in the power spectrum may cause some (or a large) amount of deviation in the determined chromatic dispersion from an actual chromatic dispersion. The second operational mode includes applying multiple chromatic dispersion compensations (e.g. multiple chromatic dispersion pre-compensations for the direct detection systems; and multiple chromatic dispersion pre-compensations or multiple chromatic dispersion post-compensations for coherent detection systems) for the accurate determination of the chromatic dispersion (an actual chromatic dispersion) in the optical link **206.** As compared to conventional PAPR-based method, when chromatic dispersion determination is made by using the first operational mode or the second operational mode, an approximately 1/3$^{rd}$ or 2/3$^{rd}$ reduction in complexity is achieved. Moreover, in the first operational mode or the second operational mode, an Inverse Fast Fourier transform (IFTT) is not required for any calculations (e.g. operations related to power spectrums), and the calculations related to the power spectrums are executed in frequency domain, thereby further reducing the complexity of the system **200.**

In some embodiments, at least one of the first operational mode or the second operational mode of the plurality of operational modes, is pre-set at the optical signal receiving apparatus **204.** For example, the first operational mode may be pre-set by default at the optical signal receiving apparatus **204.** In some embodiments, the selection of the first operational mode or the second operational mode is dynamic and performed in real time or a near-real time, based on the accuracy of the results. In some embodiments, the selection of the first operational mode or the second operational mode is user configurable.

In a case where the first operational mode is selected, the optical signal receiving apparatus **204** is configured to receive the signal (i.e. the optical signal) via the optical link **206** from the optical signal transmitting apparatus **202.** The optical signal is converted in a digital domain by the optical signal receiving apparatus **204** (e.g. using an analogue to digital converter at the optical signal receiving apparatus **204).** In accordance with an embodiment, the optical signal receiving apparatus is configured to generate a power spectrum for the received signal based on a conversion of the received signal to a frequency domain. The generated power spectrum is a distribution of a power spectral density of the received signal in the frequency domain. The conversion of the received signal into the frequency domain may be done using Fourier transform, such as a Fast Fourier transform (FTT).

In accordance with an embodiment, the optical signal receiving apparatus **204** is further configured to select a value (e.g. $D_{com}$) of pre-compensated chromatic dispersion associated with the received signal for an estimation of a first chromatic dispersion (e.g. a rough or an initial estimation of the chromatic dispersion) of the received signal. The estimation of the first chromatic dispersion of the received signal is based any one of following equations (equation 1 or equation 2).

$$k\left(D_{ij} + D_{com}\right) f_j{}^2 + \Phi(a) = \pm\left[(j-1)\pi + \frac{\pi}{2}\right] \qquad (1)$$

where j = 1, 2, 3, ...; $k = \frac{\pi\lambda^2}{c}$, where "c" is speed of light in vacuum, "A" is optical carrier wavelength, $\Phi(a)$ is phase related to the received signal; and $f_j$ is a frequency corresponding to j$^{th}$ frequency dip (i.e. one frequency dip).

$$D_{ij} = \pm \frac{\overset{*}{(i-j)} \pi}{\overset{*}{k} (f_i^2 - f_j^2)} - D_{com} \qquad (2)$$

where i= 1, 2, 3, ... K;j= i+1, i+2, ..., K; K≥2.

$D_{ij}$ is the first chromatic dispersion; $D_{com}$ is the selected initial chromatic dispersion value in picoseconds per nanometre (ps/nm); and $f_i$ and $f_j$ are the frequencies corresponding to the ith and the jth frequency dips of a power spectral density (PSD) of interest (e.g. a power spectrum of the received signal). Notably, $\pm$ refers to chromatic dispersion under pre-compensation and chromatic dispersion over pre-compensation, respectively.

The optical signal receiving apparatus **204** is further configured to estimate the first chromatic dispersion of the received signal based on at least one frequency dip in the power spectrum associated with the received signal. The frequency dips $f_i$ and fj are derived from the power spectrum associated with the received signal. If equation (1) is used, only one frequency dip is needed such as a first frequency dip ($f_j$) and the phase term "Φ(a)" is ignored, to obtain the first chromatic dispersion (i.e. a rough chromatic dispersion). If equation (2) is used, two frequency dips (e.g. $f_i$ and $f_j$) are needed to obtain the first chromatic dispersion (i.e. the rough chromatic dispersion). In an example, the first operational mode uses a single chromatic dispersion value (such as the value of pre-compensated chromatic dispersion $D_{com}$). The value of pre-compensated chromatic dispersion $D_{com}$ is selected and put in the equation 1 or equation 2 to estimate the first chromatic dispersion $D_{ij}$. If "K" number of frequency dips appear inside the signal frequency band of the power spectrum of the received signal in total, there are K(K-1)/2 estimations of chromatic dispersions. It will be appreciated that the number of frequency dips is determined by a frequency window considered within the power spectrum of the received signal. Thus, the first chromatic dispersion value $D_{ij}$ is an average of the values of estimated chromatic dispersions values. Beneficially, as the value of pre-compensated chromatic dispersion $D_{com}$ is selected, it is ensured that at least two frequency dips exist even if chromatic dispersion of the optical link **206** is small, and thus an actual and an accurate chromatic dispersion for even a short reach optical link can be determined. Optionally, the value of pre-compensated chromatic dispersion is selected as $D_{com}$ = 0. This is done in a case where the length of the optical link **206** is long enough to generate multiple frequency dips (e.g. for long haul optical links).

The optical signal receiving apparatus **204** is further configured to provide, based on the estimated first chromatic dispersion, a set of chromatic dispersion values to a chromatic dispersion generation circuit to obtain a set of signals. In an implementation, the chromatic dispersion generation circuit is provided at the optical signal receiving apparatus **204**. In another implementation, the chromatic dispersion generation circuit is provided at the optical signal transmitting apparatus **202** when the received signal is provided as a feedback to the optical signal transmitting apparatus **202**. The set of signals r'(t) are represented by the following equation (i.e. equation (3)):

$$r'(t) = |ifft [fft(r(t) - \min (r(t))) * exp (\frac{j\pi\lambda^2 D_a}{c} f^2)]|^2 \qquad (3)$$

where "ifft" represents inverse Fast Fourier transform, "fft" represents Fast Fourier transform and $D_a$ represents the set of chromatic dispersion values. The values of the set of chromatic dispersion values are selected close to the estimated first chromatic dispersion. In accordance with an embodiment, the optical signal receiving apparatus is further configured to generate a set of power spectrums for the set of signals r'(t). Moreover, each of the set of power spectrums is a distribution of a power spectral density in the frequency domain corresponding to each of the obtained set of signals. A comparison of the power spectrum associated with the received signal and power spectrums associated with the set of signals is shown and described, for example, in FIG. 3A.

In accordance with an embodiment, the optical signal receiving apparatus **204** is configured to determine a set of slopes from the set of power spectrums associated with the obtained set of signals for the determination of the second chromatic dispersion. A slope is determined for each power spectrum associated with each signal of the set of signals r'(t) to obtain the set of slopes. The optical signal receiving apparatus **204** is configured to compare a slope associated with the power spectrum of the received signal with each slope of the set of slopes associated with the set of power spectrums of the obtained set of signals in order to determine a second chromatic dispersion. Based on the comparison, an amount of difference (e.g. a spectral domain amplitude difference) is calculated between the slope of the power spectrum of the received signal and each slope associated with the set of power spectrums of the obtained set of signals (r'(t)). The optical signal receiving apparatus **204** is configured to identify a slope from the set of slopes having a least slope difference with the slope associated the received signal, based on the comparison, for the determination of a second chromatic dispersion. The second chromatic dispersion (i.e. the final or the actual chromatic dispersion) is the one chromatic dispersion value from the provided set of chromatic dispersion values that corresponds to the identified slope having the least slope difference. The signal (from the set of signals) corresponding to the slope having the least (i.e. the smallest) slope difference with the slope associated the received signal indicates that the value of chromatic dispersion (from the provided set of chromatic dispersion values) used to generate such signal denotes an actual amount of chromatic dispersion in the optical link **206.** Thus, it can be stated that the optical signal receiving apparatus **204** determines the second chromatic dispersion (i.e. the final and accurate chromatic dispersion) based on the provided set of chromatic dispersion values, the power spectrum associated with the received signal, and the set of power spectrums associated with the obtained set of signals.

The advantages of the method employing the first mode of operation is that at most one or two frequency dips are required from the power spectrum of the received signal to estimate the first chromatic dispersion, implying that the first mode of operation can estimate chromatic dispersion in the optical links with shorter distances to cover metropolitan area networks including even access networks. Furthermore, the method employing the first mode of operation has low complexity, as based on the initial chromatic dispersion, only three chromatic dispersion values in the set of chromatic dispersion values are sufficient to determine the second chromatic dispersion.

In accordance with an embodiment, the optical signal receiving apparatus **204** is configured to provide the determined second chromatic dispersion to a chromatic dispersion compensation circuit. The determined second chromatic dispersion is used by the chromatic dispersion compensation circuit for a pre-compensation of the chromatic dispersion in the optical link. In an implementation, the chromatic dispersion compensation circuit is provided at the optical signal transmitting apparatus **202** for the pre-compensation. The chromatic dispersion compensation is performed at the optical signal transmitting apparatus **202** in the direct detection systems as there is usually a loss of phase information upon application of square-law direct detection at the optical signal receiving apparatus **204.** Moreover, the chromatic dispersion compensation is potentially performed at the optical signal transmitting apparatus **202** in the coherent systems independent of an in-phase/quadrature modulator. The use of the chromatic dispersion compensation circuit in the direct detection systems in further explained, for example, in FIG. 4A. In another implementation, the chromatic dispersion compensation circuit is provided at the optical signal receiving apparatus **204** itself. In such a case, the chromatic dispersion compensation circuit of the optical signal receiving apparatus **204** is configured to use the determined second chromatic dispersion for a post-compensation of the chromatic dispersion in the optical link **206.** The chromatic dispersion compensation is generally implemented at the optical signal receiving apparatus **204** in the coherent detection systems with the in-phase/quadrature modulator, as it is more efficient because of full optical field signal detection and further as it can track phase angle variation in the optical link **206.** The use of the chromatic dispersion compensation circuit for post-compensation in the coherent detection systems in further explained, for example, in FIG. 4B.

In accordance with an embodiment, instead of the first operational mode, the second operational mode may be selected. For example, when the frequency dips $f_i$ and $f_j$ in the first operational mode are very close to each other in the power spectrum of the received signal, the second operational mode is potentially selected for determination of chromatic dispersion in the optical link **206.** Based on the selection of the second operational mode, the optical signal receiving apparatus **204,** in a first iteration of a plurality of iterations, is configured to select at least two compensated chromatic dispersion values for a new signal transmitted by the optical signal transmitting apparatus **202.** The at least two-compensated chromatic dispersion values are at least one of: pre-compensated chromatic dispersion values or post-compensated chromatic dispersion values. The optical signal receiving apparatus **204,** in the first iteration, obtains a first signal and a second signal based on the at least two compensated chromatic dispersion values. The optical signal transmitting apparatus **202** transmits the new signal that is received by the optical signal receiving apparatus **204** via the optical link **206.** The at least two compensated chromatic dispersion values are selected for the new signal by the chromatic dispersion generation circuit. In the first iteration, the first signal (i.e. a first derivative signal) and a second signal (i.e. a second derivative signal) of the new signal is obtained from the chromatic dispersion generation circuit **212** based on the selected two chromatic compensation values. The two chromatic compensation values such as $D_{com,m}$ and $D_{com,n}$, that are selected are different. The plurality of iterations in the second operational mode are performed based on the following equation.

$$D_{mn} = \frac{\sum_{j=1}^{J} f_{j,m}{}^2 D_{com,m} - \sum_{j=1}^{J} f_{j,n}{}^2 D_{com,n}}{\sum_{j=1}^{J} \left( f_{j,m}{}^2 - f_{j,n}{}^2 \right)} \qquad (4)$$

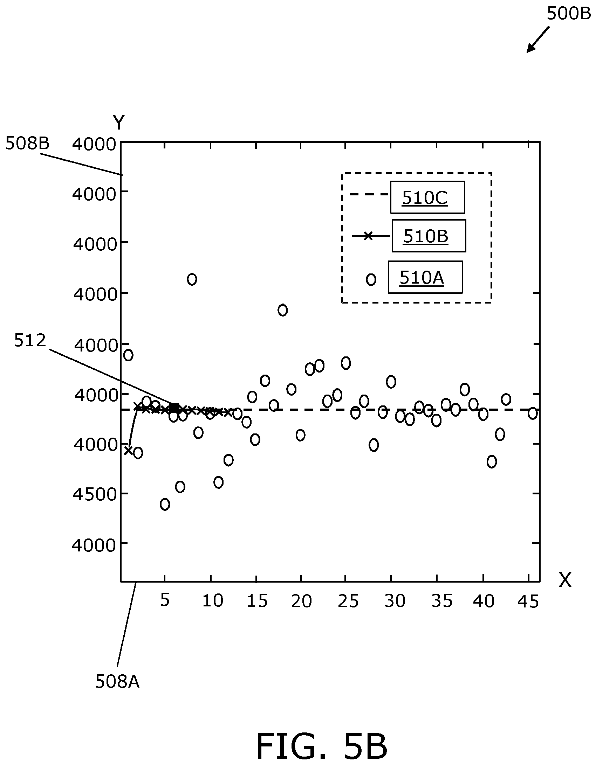

where m=1,2,3,...K; n=m+1,m+2,...,K; and K≥2
where K is a number of pre-compensations and J is a number of frequency dips in the power spectrum of the new signal. $D_{mn}$ represents a value of chromatic dispersion obtained in each iteration of the plurality of iterations. The determination of the representative chromatic dispersion value using the second operational mode ensures that the determined chromatic dispersion is as close to the accurate chromatic dispersion of the new signal as possible. Notably, a total of K(K-1)/2 iterations are obtained (which represents a number of the plurality of iterations). An example of the determination of the representative chromatic dispersion value using the second operational mode is further described, for example, in FIG. 5B.

In accordance with an embodiment, based on the selection of the second operational mode, the optical signal receiving apparatus **204** in the first iteration, is configured to generate a first power spectrum associated with the first signal and a second power spectrum associated with the second signal. The optical signal receiving apparatus **204** is further configured to determine a first set of frequency values that corresponds to frequency dips in the first power spectrum and a second set of frequency values that corresponds to frequency dips in the second power spectrum. The first power spectrum associated with the first signal represents a distribution of power of the first signal into its frequency components. Similarly, the second power spectrum associated with the second signal represents a distribution of power of the second signal into its frequency components. In the first iteration, a first frequency dip is selected in the first power spectrum of the first signal, such that the value $f_{j,m}$ represents a frequency dip in the first power spectrum. Also, in the first iteration, a second frequency dip is selected in the second power spectrum of the second signal, such that the value $f_{j,n}$ represents a frequency dip in the second power spectrum.

In accordance with an embodiment, based on the selection of the second operational mode, the optical signal receiving apparatus **204** is further configured to determine in the plurality of iterations, a plurality of chromatic dispersion values based on the provided at least two compensated chromatic dispersion values, the determined first set of frequency values, and the determined second set of frequency values in each iteration of the plurality of iterations. Moreover, the optical signal receiving apparatus **204** is configured to eliminate one or more chromatic dispersion values from the determined plurality of chromatic dispersion values that has a deviation greater than a defined threshold. Furthermore, the optical signal receiving apparatus **204** is configured to determine a representative chromatic dispersion value that is representative of the determined plurality of chromatic dispersion values post the elimination. Several values of $D_{mn}$ are obtained in the plurality of iterations as the plurality of determined chromatic dispersion values associated with the new signal. The optical signal receiving apparatus **204** is configured to eliminate one or more chromatic dispersion values from the plurality of determined chromatic dispersion values that has the deviation greater than the defined threshold. The defined threshold is a value above which a deviation of the one or more chromatic dispersion values from the plurality of determined chromatic dispersion values is statistically misleading and may potentially hamper the determination of the representative chromatic dispersion value (e.g. create error in averaging due to very high deviation). Such one or more chromatic dispersion values that has the deviation greater than the defined threshold are eliminated. The remaining chromatic dispersion values from the plurality of determined chromatic dispersion values are utilised to determine the representative chromatic dispersion value. Moreover, the optical signal receiving apparatus determines the representative chromatic dispersion value that is representative of the plurality of determined chromatic dispersion values post the elimination. In an example, the representative chromatic dispersion value is determined by calculating any one of an average, a mean, a median, or a mode, of the remaining chromatic dispersion values (post elimination) from the plurality of determined chromatic dispersion values. The representative chromatic dispersion value is the accurately determined chromatic dispersion value in the second operational mode.

In accordance with an embodiment, based on the selection of the second operational mode, the determined representative chromatic dispersion value is further provided to a chromatic dispersion compensation circuit. The determined representative chromatic dispersion value is used by the chromatic dispersion compensation circuit for at least one of: a post-compensation of the chromatic dispersion in the optical link at the optical signal receiving apparatus **204** in a coherent detection system with the in-phase/quadrature modulator, or a pre-compensation of the chromatic dispersion in the optical link **206** at the optical signal transmitting apparatus **202** for a direct detection system or the coherent detection system independent of the in-phase/quadrature modulator. The representative chromatic dispersion value is provided to the chromatic dispersion compensation circuit for the post-compensation of the chromatic dispersion in the optical link **206** at the optical signal receiving apparatus **204** in the coherent detection system with the in-phase/quadrature modulator, as the phase information is intact in the coherent detection system with the in-phase/quadrature modulator at the optical signal receiving apparatus **204.**

In an exemplary scenario, either the first operational mode or the second operational mode is potentially utilised for the optical communication between the data centres in the Metropolitan Area Networks (MANs). The MANs are based on either the direct detection systems or the coherent detection systems. Moreover, the coherent systems are either associated with the in-phase/quadrature modulator or independent of the in-phase/quadrature modulator. It will be appreciated that in the direct detection systems, the chromatic dispersion compensation is performed at the optical signal transmitting apparatus **202** as there is a loss of phase information upon application of square-law direct detection at the optical signal receiving apparatus **204**. Moreover, in the coherent detection systems independent of the in-phase/quadrature modulator, the chromatic dispersion compensation is performed at the optical signal transmitting apparatus **202.** On the other hand, in the coherent detection systems with the in-phase/quadrature modulator, the chromatic dispersion compensation is usually implemented at the optical signal receiving apparatus **204** as it is more efficient because of full optical field signal detection and as tracking of any variation in the optical link **206** is possible. The received signal form the optical link **206** after the compensation of the chromatic dispersion is converted into the electrical signal to extract data associated with the electrical signal.

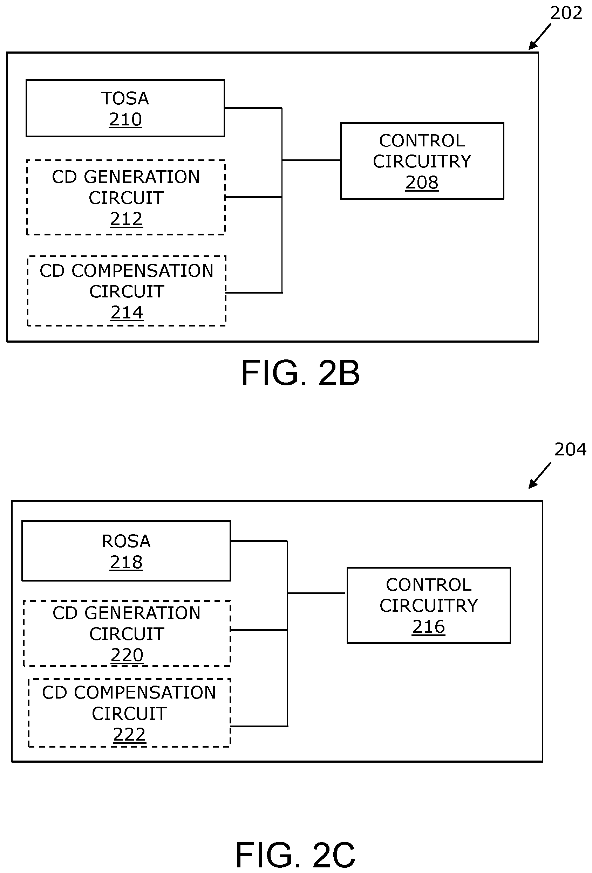

FIG. 2B is a block diagram that illustrates various exemplary components of an optical signal transmitting apparatus, in accordance with an embodiment of the present disclosure. FIG. 2B is described in conjunction with elements from FIGs. 2A. With reference to FIG. 2B, there is shown the optical signal transmitting apparatus **202** that includes a control circuitry **208,** a Transmitter Optical Sub Assembly (TOSA) **210,** a chromatic dispersion generation circuit **212** and a chromatic dispersion compensation circuit **214.** The chromatic dispersion compensation circuit **214** is provided as a pre-compensator in the optical signal transmitting apparatus **202.** Optionally, the optical signal transmitting apparatus **202** may further include a memory for storage purposes (not shown).

The control circuitry **208** is configured to transmit a signal to the optical signal receiving apparatus **204,** via the optical link **206.** In an implementation, the control circuitry **208** may be a general-purpose processor. Examples of the control circuitry **208** include, but is not limited to a microprocessor, a microcontroller, a complex instruction set computing (CISC) processor, an application-specific integrated circuit (ASIC) processor, a reduced instruction set (RISC) processor, a very long instruction word (VLIW) processor, a central processing unit (CPU), a state machine, a data processing unit, and other processors or circuits. Moreover, the control circuitry **208** may refer to one or more individual processors, processing devices, a processing unit that is part of a machine. It will be appreciated that the operations performed at the optical signal transmitting apparatus **202** is potentially performed by the control circuitry **208** of the optical signal transmitting apparatus **202.**

The TOSA **210** refers to a sub-assembly of components in the optical signal transmitting apparatus **202** responsible for conversion of an electrical signal into an optical signal followed by transmission of the optical signal over the optical link **206** connected to the optical signal transmitting apparatus **202.** Electrical signals are used to transmit or receive information in the form of bits. The TOSA **210** includes a plurality of components, such as a photodetector, an electro-optical interface, and electrical connection. Optionally, the optical signal transmitting apparatus **202** may comprise a Bi-Directional Optical Sub Assembly (BOSA) instead of TOSA **210.**

The chromatic dispersion generation circuit **212** is provided at the optical signal transmitting apparatus **202** when the received signal is provided as a feedback to the optical signal transmitting apparatus **202.** The chromatic dispersion generation circuit **212** includes, for example, transformer components, such as Fourier transformers components. The transformer components transform the received signal into frequency domain for obtaining the power spectrum associated with the received signal. The chromatic dispersion generation circuit **212** is configured to generate a set of signals itself (or using a separate signal generator provided in the optical signal transmitting apparatus **202)** based on the provided set of chromatic dispersion values. Examples of the chromatic dispersion generation circuit **212** include, but is not limited to an application-specific integrated circuit (ASIC) processor, a data processing unit, a microcontroller, and other processors or circuits. In an implementation, the chromatic dispersion generation circuit **212** may be a part of the control circuity **208** as an integrated circuit.

The chromatic dispersion compensation circuit **214** is an electrical domain chromatic dispersion compensator. The chromatic dispersion compensation circuit **214** may or may not be present in the optical signal transmitting apparatus **202** depending upon the type of compensation used in optical communication. In case of pre-compensation, when the signal is compensated for the chromatic dispersion before entering the optical link **206,** the chromatic dispersion compensation circuit **214** is present in the optical signal transmitting apparatus **202.**

FIG. 2C is a block diagram that illustrates various exemplary components of an optical signal receiving apparatus, in accordance with an embodiment of the present disclosure. FIG. 2C is described in conjunction with elements from FIGs. 2A and 2B. With reference to FIG. 2C, there is shown the optical signal receiving apparatus **204** that includes a control circuitry **216,** a Receiver Optical Sub Assembly (ROSA) **218,** a chromatic dispersion generation circuit **220,** and a chromatic dispersion compensation circuit **222** (in this case a post-compensator). Optionally, the optical signal receiving apparatus **204** may further include a memory for storage purposes (not shown).

The control circuitry **216** is configured to estimate a first chromatic dispersion of a received signal based on at least one frequency dip in a power spectrum associated with the received signal. The control circuitry **216** is further configured to determine the second chromatic dispersion (i.e. a final and accurate chromatic dispersion) based on the first chromatic dispersion, a power spectrum associated with the received signal, and a set of power spectrums associated with the obtained set of signals. Examples of implementation of the control circuitry **216** is similar to that of the control circuitry **208** (FIG. 2B).

The ROSA **218** refers to a sub-assembly of components in the optical signal receiving apparatus **204** responsible for conversion of an optical signal to an electrical signal. The ROSA **218** includes a plurality of components, such as a photodetector and an electro-optical interface. Optionally, the optical signal receiving apparatus **204** may comprise a Bi-Directional Optical Sub Assembly (BOSA) instead of ROSA **218.**

In an implementation, the chromatic dispersion generation circuit **220** is provided at the optical signal receiving apparatus **204.** Examples of implementation of the chromatic dispersion generation circuit **220** is similar (or same) to the chromatic dispersion generation circuit **212** (FIG. 2B).

In an implementation, the chromatic dispersion compensation circuit **222** is provided as a post-compensator in the optical signal receiving apparatus **204.** The chromatic dispersion compensation circuit **222** is an electrical domain chromatic dispersion compensator (implemented at electrical part of the optical signal receiving apparatus **204).** In an example, the electrical domain chromatic dispersion compensation is potentially implemented by using electrical equaliser circuits, such as Feed Forward Equalizer (FFE), Feed Forward-Decision Feedback Equalizer (FFE-DFE), Nonlinear Feedforward-Decision Feedback Equalizer (NL-FFE-DFE) Maximum Likelihood Sequence Estimator (MLSE), and the like.

FIG. 3A is an illustration of power spectrums of received signals before and after providing a set of chromatic dispersion values, in accordance with an embodiment of the present disclosure. FIG. 3A is described in conjunction with elements from FIGs. 2A, 2B, and 2C. With reference to FIG. 3A, there is shown a graphical representation **300A.** The graphical representation **300A** illustrates a power spectral density curve **302** of the received signal via the optical link **206** and a set of power spectral density curves **304** of the obtained set of signals (i.e. obtained after providing the set of chromatic dispersion values to a chromatic dispersion generation circuit (such as the chromatic dispersion generation circuit **212** or **220).** The power spectral density curve **302** of the received signal corresponds to a power spectrum of the received signal in frequency domain. The set of power spectral density curves **304** corresponds to the set of power spectrums of the obtained set of signals (e.g. the set of signals r'(t) of FIG. 2A) in frequency domain.

The control circuitry **216** of the optical signal receiving apparatus **204** is configured to estimate the first chromatic dispersion of the received signal based on at least one frequency dip in the power spectrum associated with the received signal. If equation (1) (FIG. 2A) is used, only one frequency dip is needed such as a first frequency dip. If equation (2) is used, two frequency dips are needed to obtain the first chromatic dispersion (i.e. the rough chromatic dispersion). As shown in FIG. 3A, the power spectrums fade gradually on their progress. This spectral fading information is used in determination of the second chromatic dispersion. The control circuitry **216** of the optical signal receiving apparatus **204** is further configured to determine a set of slopes from the set of power spectral density curves **304** associated with the obtained set of signals for the determination of the second chromatic dispersion (e.g. a final and accurate chromatic dispersion).

FIG. 3B is a graphical representation that illustrates a parabolic curve related to slope differences, in accordance with an embodiment of the present disclosure. FIG. 3B is described in conjunction with elements from FIGs. 2A, 2B, 2C, and 3A. With reference to FIG. 3B, there is shown a graphical representation **300B.** The graphical representation **300B** illustrates a spectral domain absolute amplitude difference calculated based on a comparison of a slope of the power spectrum of the received signal and each slope of the set of slopes of the power spectrums of the obtained set of signals. The control circuitry **216** of the optical signal receiving apparatus **204** is configured to identify a slope from the set of slopes having a least slope difference **306** with the slope associated the received signal, based on the comparison, for the determination of the second chromatic dispersion. The second chromatic dispersion (i.e. the final chromatic dispersion) is the one chromatic dispersion value from the provided set of chromatic dispersion values that corresponds to the identified slope having the least slope difference **306.**

FIG. 4A is a network environment diagram of an exemplary direct detection system for pre-compensation of chromatic dispersion, in accordance with an embodiment of the present disclosure. FIG. 4A is described in conjunction with elements from FIGs. 2A-2C, 3A, and 3B. With reference to FIG. 4A, there is shown the network environment of a direct detection system **400A** that includes the optical signal transmitting apparatus **202,** the optical signal receiving apparatus **204,** and the optical link **206** of FIG. 2A

In this embodiment, the optical signal transmitting apparatus **202** further includes a signal generator **402,** the chromatic dispersion compensation circuit **214,** a digital-to-analogue converter (DAC) **404,** and a signal modulator **406.** In an implementation, the signal generator **402,** the DAC **404** and the signal modulator **406** are a part of the control circuitry **208** (FIG. 2B) of the optical signal transmitting apparatus **202.** The optical signal receiving apparatus **204** includes the ROSA **218,** an analogue-to-digital converter (ADC) **408,** a digital signal processor **410,** and the control circuitry **216.** In an implementation, the digital signal processor **410** is potentially a part of the control circuitry **216** (FIG. 2C) or a co-processor. In the direct detection system **400A,** the chromatic dispersion compensation is performed at the optical signal transmitting apparatus **202** (i.e. a pre-compensation) as there is a loss of phase information upon application of square-law direct detection at the optical signal receiving apparatus **204.**

In operation, the optical signal transmitting apparatus **202** is configured to transmit input data in the form of an optical signal to the optical signal receiving apparatus **204,** via the optical link **206.** An electrical signal is used to transmit the input data in the form of bits. The electrical signal is generated at the signal generator **402,** and then the electrical signal is provided to the chromatic dispersion compensation circuit **214** (for compensation, if any). The electrical signal is converted to an analogue signal by the DAC **404,** and then the analogue signal is modulated by the signal modulator **406** to be propagated as an optical signal (e.g. a light beam) via the optical link **206.** The transmitted optical signal usually suffers from chromatic dispersion when passed through the optical link **206.**

At the optical signal receiving apparatus **204,** at the beginning of the communication, an accurate chromatic dispersion is determined, which is then provided as feedback to the chromatic dispersion compensation circuit **214** to compensate the determined chromatic dispersion at the transmitter side (i.e. the optical signal transmitting apparatus **202)** in next communication. For example, at the beginning of the communication, the received optical signal passes through the ROSA **218,** which detects the received optical signal, and provides the received signal to the ADC **408.** The ADC **408** converts the received signal in the analogue domain to digital domain, and the sample signal is provided to the digital signal processor **410** for digital signal processing operations, for example, for recovery of the input data in the sample signal. Alternatively stated, a part of the digital signal is received by the digital signal processor **410** and a part of the digital signal is utilised by the control circuitry **216** to determine the first chromatic dispersion and the second chromatic dispersion from the received signal (using either first operational mode, such as using equation (1) or (2) or the second operational mode, such as using equation (4) of FIG. 2A). The accurate chromatic dispersion determined by the control circuitry **216** at the beginning of the communication, is provided as feedback to the chromatic dispersion compensation circuit **214** at the optical signal transmitting apparatus **202** to compensate for the chromatic dispersion in the received signal.

FIG. 4B is a network environment diagram of an exemplary coherent detection system for post-compensation of chromatic dispersion, in accordance with an embodiment of the present disclosure. FIG. 4B is described in conjunction with elements from FIGs. 2A-2C, 3A, 3B, and 4A. With reference to FIG. 4B, there is shown the network environment of a coherent detection system **400B** that includes the optical signal transmitting apparatus **202,** the optical signal receiving apparatus **204,** and the optical link **206.**

In this embodiment, the optical signal receiving apparatus **204** further includes a device **412** that includes components, such as an integrated coherent receiver (ICR) and interchangeable test adaptor (ITA). As coherent systems (e.g. the coherent detection system **400B)** encode information in the phase and polarization of the light, as opposed to just intensity of the light, a phase demodulator is usually required to convert the phase and polarization encoded information into intensity information, which is detectable by a photodetector (of the ROSA **218** (FIG. 2B)) of the optical signal receiving apparatus **204.** The device **412** is configured to perform such phase demodulation to convert the phase and polarization encoded information into intensity information. The optical signal receiving apparatus **204** further comprises one or more ADCs **414,** a transmission system **416,** the chromatic dispersion compensation circuit **222,** and the control circuitry **216.** Optionally, in case of the coherent systems, the device **412** may be a part of the ROSA **218** (FIG. 2C). In an implementation, optionally, the one or more ADCs **414** and the transmission system **416** may be integrated as a part of the control circuitry **216.** In an example, the transmission system **416** include a coherent transmitter with a multiple input multiple output (MIMO) or Multiple-input and single-output (MISO) based transmission capability (e.g. 2x2 MIMO or 2x1 MISO). Furthermore, the optical signal transmitting apparatus **202** comprises a digital signal processor **418** and the TOSA **210** (of FIG. 2B).

In operation, in the coherent detection system **400B,** the TOSA **210** receives an electrical signal from the digital signal processor **418** of the optical signal transmitting apparatus **202.** The information that is to be transmitted (to the optical signal receiving apparatus **204)** is first modulated (i.e. encoded) in the phase (and/or polarization) of the light by the digital signal processor **418.** The TOSA **210** is configured to convert the electrical signal carrying the encoded information to an optical signal and propagate the optical signal via the optical link **206.** The optical signal may undergo chromatic dispersion in the optical link **206.** Thus, the optical signal received via the optical link **206** is post-compensated in the optical signal receiving apparatus **204** to counter the effect of the chromatic dispersion. At the optical signal receiving apparatus **204,** the optical signal is detected and processed by the device **412** to perform phase demodulation to convert the phase (and/or polarization) encoded information into intensity information. Thereafter, the processed signal is provided to the one or more ADCs **414** to convert the processed signal in analogue domain to digital domain for further processing.

The digital signal is post-compensated in the chromatic dispersion compensation circuit **222** by receiving the determined chromatic dispersion from the control circuitry **216.** The control circuitry **216** is configured to determine the first chromatic dispersion and the second chromatic dispersion from the digital signal (i.e. the received signal in the digital domain) using either first operational mode, such as using equation (1) or (2) or the second operational mode, such as using equation (4) of FIG. 2A. The accurate chromatic dispersion (i.e. the second chromatic dispersion) determined by the control circuitry **216** is fed to the chromatic dispersion compensation circuit **222** at the optical signal receiving apparatus **204** for post-compensation of the chromatic dispersion in the received signal. In an implementation, the compensated signal is then further transmitted to a next network node using the transmission system **416.** In another implementation, at the beginning of communication, the digital signal is split, and a part of the signal is received by the control circuitry **216** for the chromatic dispersion determination, and another part of the signal is immediately passed to the transmission system **416** for further processing (e.g. to prepare for multiplexing and 2x2 MIMO or 2x1 MISO communication).

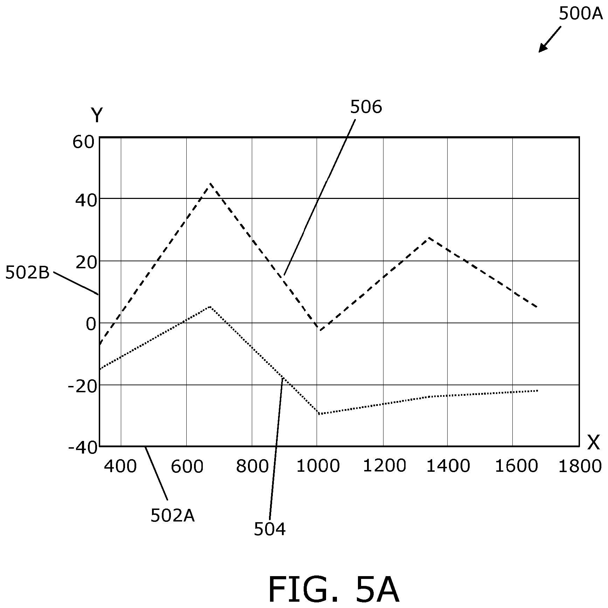

FIG. 5A is a graphical representation that illustrates comparative results of measurements of pre-compensated chromatic dispersion in an exemplary direct detection system, in accordance with an embodiment of the present disclosure. FIG. 5A is described in conjunction with elements from FIGs. 2A-2C, 3A, 3B, 4A, and 4B. With reference to FIG. 5A, there is shown a graphical representation **500A** with an X-axis **502A** that represents values of chromatic dispersion pre-compensation in picoseconds per nanometre (ps/nm) and a Y-axis **502B** that represents a chromatic dispersion estimation deviation in ps/nm. In the graphical representation **500A,** a first line **504** represents measurements of pre-compensated chromatic dispersion in the direct detection system when chromatic dispersion determination is made by using the first operational mode (of the method of present disclosure), whereas a second line **506** represents measurements of pre-compensated chromatic dispersion in the same direct detection system when chromatic dispersion estimation is executed using a known method (e.g. PAPR-based conventional method). In an example, the direct detection system corresponds to the direct detection system **400A** of FIG. 4A. The direct detection system used for experimental testing and offline measurements was a 56 Gigabytes per second (Gb/sec) Phase-Amplitude Modulation (PAM)-2 direct detection system, in which the optical signal transmitter included a chromatic dispersion pre-compensator, two ADCs, and an in-phase/quadrature (I/Q) Mach-Zehnder modulator (MZM), and a **360** kilometres (km) single mode optical fibre link was considered. The optical signal receiver was similar to that of the optical signal receiving apparatus **204** of FIG. 4A. As shown in the FIG. 5A, an average chromatic dispersion estimation error of approximately -20 ps/nm is achieved (represented by the first line **504)** when the pre-compensation is executed using the second chromatic dispersion determined using the first operational mode (of the present disclosure), whereas the known method provided an average error of about +20 ps/nm.

FIG. 5B is a graphical representation of measurements of chromatic dispersion using multiple pre-compensations in an exemplary direct detection system, in accordance with another embodiment of the present disclosure. FIG. 5B is described in conjunction with elements from FIGs. 2A-2C, 3A, 3B, 4A, 4B, and 5A. With reference to FIG. 5B, there is shown a graphical representation **500B** with an X-axis **508A** that represents a number of iterations and a Y-axis **508B** that represents chromatic dispersion in picoseconds per nanometre (ps/nm). In the graphical representation **500B,** there is shown a plurality of determined chromatic dispersion values **510A** (represented by circles), averaged chromatic dispersion values **510B** (represented by "X" sign connected with each other by a line), a final chromatic dispersion **510C** (represented by a thick dashed line). There is also shown a representative chromatic dispersion value **512** selected in the sixth iteration. Notably, the direct detection system used for experimental testing and offline measurements is same as used in the FIG. 5A, but differs in that the chromatic dispersion determination is made by using the second operational mode (i.e. using multiple pre-compensations, for example, 10 pre-compensations in this case).

In the graphical representation **500B,** for K = 10 pre-compensations, a total of K(K-1)/2 = 45 chromatic dispersion values are obtained in 45 iterations, where K= a number of pre-compensations. The 45 chromatic dispersion values correspond to the plurality of determined chromatic dispersion values **510A** (represented by circles). An iterative processing is performed in the second operational mode using equation (4) (of FIG. 2A). One or more chromatic dispersion values that has the deviation greater than a defined threshold are eliminated from the plurality of determined chromatic dispersion values **510A.** In this case, four samples are withdrawn in each iteration and 12 iterations are performed. The remaining chromatic dispersion values (represented by the averaged chromatic dispersion values **510B)** are averaged to determine the final chromatic dispersion **510C.** The representative chromatic dispersion value **512** selected in the sixth iteration corresponds to the final chromatic dispersion **510C** and is the correct chromatic dispersion derived from an averaging of the determined plurality of chromatic dispersion values **510A** post the elimination (i.e. averaging the remaining chromatic dispersion values post the elimination).

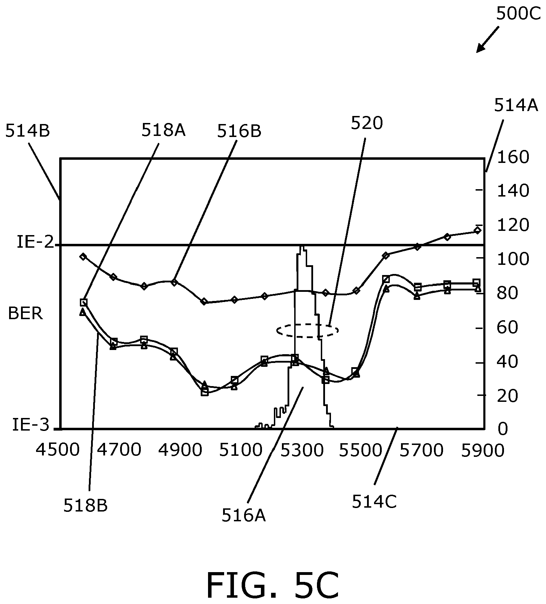

FIG. 5C is a graphical representation that depicts results of measurements of compensated chromatic dispersion in an exemplary coherent detection system, in accordance with an embodiment of the present disclosure. FIG. 5C is described in conjunction with elements from FIGs. 2A-2C, 3A, 3B, 4A, 4B, 5A, and 5B. With reference to FIG. 5C, there is shown a graphical representation **500C** with a first axis **514A** that represents frequency (e.g. 0, 20, 40,...,160), a second axis **514B** that represents bit error rate (BER) (measured in error probability, where "1E-3" represents lesser error probability than "1E-2"), and a third axis **514C** (X-axis) that represents compensated chromatic dispersion in picoseconds per nanometre (ps/nm). There is further shown BER simulation for measurements of post-compensated chromatic dispersion when an accurate chromatic dispersion determination is made by using the first operational mode **516A** (of the present disclosure) with respect to using only a non-linear (NL)-phase finite impulse response (FIR) filter **516B.** There is further shown a Maximum likelihood sequence estimation (MLSE) without precoding **518A** that is used to extract data from the received signal, and a MLSE with precoding **518B** that is used to extract data from the received signal for testing the BER. In an example, the coherent detection system corresponds to the coherent detection system **400B** of FIG. 4B. The coherent detection system used for experimental testing and offline measurements was a 56 Gigabytes per second (Gb/sec) Phase-Amplitude Modulation (PAM)-2 coherent system, in which the optical signal transmitter included an Electro-absorption Modulated Laser (EML) intensity modulator, and a **360** kilometres (km) single mode optical fibre link was considered. The optical signal receiver was similar to that of the optical signal receiving apparatus **204** of FIG. 4B. In the graphical representation **500C,** for experimentation, 1000 samples (received optical signals) were considered for measurement of post-compensated chromatic dispersion at the receiver side (e.g. the optical signal receiving apparatus **204** (FIG. 4B). All of 1000 determination of the chromatic dispersion for 1000 samples was observed to lie within an optimum chromatic dispersion range, thus, an improved BER performance was achieved when chromatic dispersion determination was made by using the first operational mode **516A** (of the present disclosure). The optical signal to noise ratio (OSNR) was observed to be about 24 dB (less than 25 dB).

Modifications to embodiments of the present disclosure described in the foregoing are possible without departing from the scope of the present disclosure as defined by the accompanying claims. Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural. The word "exemplary" is used herein to mean

## EP 4 107 878 B1

"serving as an example, instance or illustration". Any embodiment described as "exemplary" is not necessarily to be construed as preferred or advantageous over other embodiments and/or to exclude the incorporation of features from other embodiments. The word "optionally" is used herein to mean "is provided in some embodiments and not provided in other embodiments". It is appreciated that certain features of the present disclosure, which are, for clarity, described in the context of separate embodiments, may also be provided in combination in a single embodiment. Conversely, various features of the invention, which are, for brevity, described in the context of a single embodiment, may also be provided separately or in any suitable combination or as suitable in any other described embodiment of the disclosure.

**Claims**

1. A method (100) for determining chromatic dispersion in an optical link (206) at an optical signal receiving apparatus (204), the method (100) comprising:

   receiving, by the optical signal receiving apparatus (204), a signal via the optical link (206) from an optical signal transmitting apparatus (202);
   estimating, by the optical signal receiving apparatus (204), a first chromatic dispersion of the received signal based on at least one frequency dip, whose frequency is obtained from a power spectrum associated with the received signal;
   providing, by the optical signal receiving apparatus (204), based on the estimated first chromatic dispersion, a set of chromatic dispersion values to a chromatic dispersion generation circuit (212, 220) to obtain a set of signals; and
   determining, by the optical signal receiving apparatus (204), a second chromatic dispersion based on the provided set of chromatic dispersion values, the power spectrum associated with the received signal, and a set of power spectrums associated with the obtained set of signals.

2. The method (100) according to claim 1, further comprising selecting, by the optical signal receiving apparatus (204), a value of pre-compensated chromatic dispersion associated with the received signal for the estimation of the first chromatic dispersion of the received signal.

3. The method (100) according to claim 1 or 2, further comprising generating, by the optical signal receiving apparatus (204), the power spectrum for the received signal based on a conversion of the received signal to a frequency domain, wherein the generated power spectrum is a distribution of a power spectral density of the received signal in the frequency domain, and wherein each of the set of power spectrums is a distribution of a power spectral density in the frequency domain corresponding to each of the obtained set of signals.

4. The method (100) according to any one of the preceding claims, wherein the determining of the second chromatic dispersion comprises determining, by the optical signal receiving apparatus (204), a set of slopes from the set of power spectrums associated with the obtained set of signals.

5. The method (100) according to claim 4, wherein the determining of the second chromatic dispersion further comprises comparing, by the optical signal receiving apparatus (204), a slope associated with the power spectrum of the received signal with each slope of the set of slopes associated with the set of power spectrums of the obtained set of signals.

6. The method (100) according to claim 5, wherein the determining of the second chromatic dispersion further comprises identifying, by the optical signal receiving apparatus (204), based on the comparison, a slope from the set of slopes having a least slope difference with the slope associated the received signal, wherein the determined second chromatic dispersion is one chromatic dispersion value from the provided set of chromatic dispersion values that corresponds to the identified slope having the least slope difference (306).

7. The method (100) according to any one of the preceding claims, wherein the chromatic dispersion generation circuit (212, 220) is provided at any one of: the optical signal receiving apparatus (204); or the optical signal transmitting apparatus (202) when the received signal is provided as a feedback to the optical signal transmitting apparatus (202).

8. The method (100) according to any one of the preceding claims, further comprising providing, by the optical signal receiving apparatus (204), the determined second chromatic dispersion to a chromatic dispersion compensation circuit (214), wherein the determined second chromatic dispersion is used by the chromatic dispersion compensation circuit (214) for a pre-compensation of the chromatic dispersion in the optical link (206), wherein the chromatic

18

dispersion compensation circuit (214) is provided at the optical signal transmitting apparatus (202) for the pre-compensation.

9. The method (100) according to any one of preceding claims 1 to 7, further comprising using, by a chromatic dispersion compensation circuit (222) of the optical signal receiving apparatus (204), the determined second chromatic dispersion for a post-compensation of the chromatic dispersion in the optical link (206).

10. The method (100) according to claim 1, further comprising selecting, by the optical signal receiving apparatus (204), at least one of a first operational mode or a second operational mode of a plurality of operational modes for determination of the chromatic dispersion in the optical link (206), wherein at least operations that comprises the estimating of the first chromatic dispersion, the providing of the set of chromatic dispersion values, and the determining of the second chromatic dispersion are executed based on the selection of the first operational mode.

11. The method (100) according to claim 10, wherein, based on the selection of the second operational mode, the method (100) further comprises:

   selecting, by the optical signal receiving apparatus (204) in a first iteration of a plurality of iterations, at least two-compensated chromatic dispersion values for a new signal transmitted by the optical signal transmitting apparatus (202), wherein the at least two-compensated chromatic dispersion values are at least one of: pre-compensated chromatic dispersion values or post-compensated chromatic dispersion values;
   obtaining, by the optical signal receiving apparatus (204) in the first iteration, a first signal and a second signal based on the at least two-compensated chromatic dispersion values; where the first signal is a first derivative signal of the new signal, and the second signal is a second derivative signal of the new signal.

12. The method (100) according to claim 11, wherein, based on the selection of the second operational mode, the method (100) further comprises:

   generating, by the optical signal receiving apparatus (204) in the first iteration, a first power spectrum associated with the first signal and a second power spectrum associated with the second signal; and
   determining, by the optical signal receiving apparatus (204) in the first iteration, a first set of frequency values that corresponds to frequency dips in the first power spectrum and a second set of frequency values that corresponds to frequency dips in the second power spectrum.

13. The method (100) according to claim 12, wherein, based on the selection of the second operational mode, the method (100) further comprises:

   determining, by the optical signal receiving apparatus (204), in the plurality of iterations, a plurality of chromatic dispersion values based on the provided at least two compensated chromatic dispersion values, the determined first set of frequency values, and the determined second set of frequency values in each iteration of the plurality of iterations;
   eliminating, by the optical signal receiving apparatus (204), one or more chromatic dispersion values from the determined plurality of chromatic dispersion values that has a deviation from the average chromatic dispersion value greater than a defined threshold; and
   determining, by the optical signal receiving apparatus (204), a representative chromatic dispersion value that is representative of the determined plurality of chromatic dispersion values post the elimination.

14. An optical signal receiving apparatus (204) for determining chromatic dispersion in an optical link (206), comprising: a control circuitry that is configured to:

   receive a signal via the optical link (206) from an optical signal transmitting apparatus (202);
   estimate a first chromatic dispersion of the received signal based on at least one frequency dip, whose frequency is obtained from a power spectrum associated with the received signal;
   provide, based on the estimated first chromatic dispersion, a set of chromatic dispersion values to a chromatic dispersion generation circuit (212, 220) to obtain a set of signals; and
   determine a second chromatic dispersion based on the provided set of chromatic dispersion values, the power spectrum associated with the received signal, and a set of power spectrums associated with the obtained set of signals.

**15.** A computer program product comprising a non-transitory computer-readable storage medium having computer-readable instructions stored thereon, the computer-readable instructions being executable by a computerised device comprised in a control circuit of the optical receiving apparatus of claim 14, the computerized device comprising processing hardware to execute a method (100) as claimed in any one of claims 1 to 13.

**Patentansprüche**

**1.** Verfahren (100) zum Bestimmen einer chromatischen Dispersion in einer optischen Verbindung (206) an einer optischen Signalempfangsvorrichtung (204), wobei das Verfahren (100) Folgendes umfasst:

Empfangen, durch die optische Signalempfangsvorrichtung (204), eines Signals über die optische Verbindung (206) aus einer optischen Signalübertragungsvorrichtung (202);

Schätzen, durch die optische Signalempfangsvorrichtung (204), einer ersten chromatischen Dispersion des empfangenen Signals basierend auf mindestens einem Frequenzeinbruch, dessen Frequenz aus einem Leistungsspektrum erlangt wird, das dem empfangenen Signal zugeordnet ist;

Bereitstellen, durch die optische Signalempfangsvorrichtung (204), basierend auf der geschätzten ersten chromatischen Dispersion, eines Satzes chromatischer Dispersionswerte an einen chromatischen Dispersionserzeugungsschaltkreis (212, 220), um einen Satz von Signalen zu erlangen; und

Bestimmen, durch die optische Signalempfangsvorrichtung (204), einer zweiten chromatischen Dispersion basierend auf dem bereitgestellten Satz chromatischer Dispersionswerte, dem Leistungsspektrum, das dem empfangenen Signal zugeordnet ist, und einem Satz von Leistungsspektren, der dem erlangten Satz von Signalen zugeordnet ist.

**2.** Verfahren (100) nach Anspruch 1, ferner umfassend Auswählen, durch die optische Signalempfangsvorrichtung (204), eines Wertes einer vorausgeglichenen chromatischen Dispersion, die dem empfangenen Signal zugeordnet ist, für die Schätzung der ersten chromatischen Dispersion des empfangenen Signals.

**3.** Verfahren (100) nach Anspruch 1 oder 2, ferner umfassend Erzeugen, durch die optische Signalempfangsvorrichtung (204), des Leistungsspektrums für das empfangene Signal basierend auf einer Umwandlung des empfangenen Signals in eine Frequenzdomäne, wobei das erzeugte Leistungsspektrum eine Verteilung einer spektralen Leistungsdichte des empfangenen Signals in der Frequenzdomäne ist und wobei jedes des Satzes von Leistungsspektren eine Verteilung einer spektralen Leistungsdichte in der Frequenzdomäne ist, die jedem des empfangenen Satzes von Signalen entspricht.

**4.** Verfahren (100) nach einem der vorhergehenden Ansprüche, wobei das Bestimmen der zweiten chromatischen Dispersion Bestimmen, durch die optische Signalempfangsvorrichtung (204), eines Satzes von Steigungen aus dem Satz von Leistungsspektren umfasst, der dem erlangten Satz von Signalen zugeordnet ist.

**5.** Verfahren (100) nach Anspruch 4, wobei das Bestimmen der zweiten chromatischen Dispersion ferner Vergleichen, durch die optische Signalempfangsvorrichtung (204), einer Steigung, die dem Leistungsspektrum des empfangenen Signals zugeordnet ist, mit jeder Steigung des Satzes von Steigungen, der dem Satz von Leistungsspektren des erlangten Satzes von Signalen entspricht, umfasst.

**6.** Verfahren (100) nach Anspruch 5, wobei das Bestimmen der zweiten chromatischen Dispersion ferner Identifizieren, durch die optische Signalempfangsvorrichtung (204), basierend auf dem Vergleich, einer Steigung aus dem Satz von Steigungen umfasst, die einen geringsten Steigungsunterschied zu der Steigung, die dem empfangenen Signal zugeordnet ist, aufweist, wobei die bestimmte zweite chromatische Dispersion ein chromatischer Dispersionswert aus dem bereitgestellten Satz chromatischer Dispersionswerte ist, welcher der identifizierten Steigung, die den geringsten Steigungsunterschied (306) aufweist, entspricht.

**7.** Verfahren (100) nach einem der vorhergehenden Ansprüche, wobei der chromatische Dispersionserzeugungsschaltkreis (212, 220) an einer der Folgenden bereitgestellt wird: der optischen Signalempfangsvorrichtung (204); oder der optischen Signalübertragungsvorrichtung (202), wenn das empfangene Signal als eine Rückmeldung an die optische Signalübertragungsvorrichtung (202) bereitgestellt wird.

**8.** Verfahren (100) nach einem der vorhergehenden Ansprüche, ferner umfassend Bereitstellen, durch die optische Signalempfangsvorrichtung (204), der bestimmten zweiten chromatischen Dispersion an einen chromatischen Dispersionsausgleichsschaltkreis (214), wobei die bestimmte zweite chromatische Dispersion durch den chromatischen Dispersionsausgleichsschaltkreis (214) für einen Vorausgleich der chromatischen Dispersion in der optischen Verbindung (206) verwendet wird, wobei der chromatische Dispersionsausgleichsschaltkreis (214) für den Vorausgleich an der optischen Signalübertragungsvorrichtung (202) bereitgestellt wird.

9. Verfahren (100) nach einem der vorhergehenden Ansprüche 1 bis 7, ferner umfassend Verwenden, durch einen chromatischen Dispersionsausgleichsschaltkreis (222) der optischen Signalempfangsvorrichtung (204), der bestimmten zweiten chromatischen Dispersion für einen Nachausgleich der chromatischen Dispersion in der optischen Verbindung (206).

10. Verfahren (100) nach Anspruch 1, ferner umfassend Auswählen, durch die optische Signalempfangsvorrichtung (204), mindestens eines von einem ersten Betriebsmodus oder einem zweiten Betriebsmodus einer Vielzahl von Betriebsmodi zur Bestimmung der chromatischen Dispersion in der optischen Verbindung (206), wobei mindestens Betriebe, die das Schätzen der ersten chromatischen Dispersion, das Bereitstellen des Satzes chromatischer Dispersionswerte und das Bestimmen der zweiten chromatischen Dispersion umfassen, basierend auf der Auswahl des ersten Betriebsmodus ausgeführt werden.

11. Verfahren (100) nach Anspruch 10, wobei das Verfahren (100) basierend auf der Auswahl des zweiten Betriebsmodus ferner Folgendes umfasst:

Auswählen, durch die optische Signalempfangsvorrichtung (204) in einer ersten Iteration einer Vielzahl von Iterationen, mindestens zweier ausgeglichener chromatischer Dispersionswerte für ein neues Signal, das durch die optische Signalübertragungsvorrichtung (202) übertragen wird, wobei die mindestens zwei ausgeglichenen chromatischen Dispersionswerte mindestens eines von Folgendem sind: vorausgeglichenen chromatischen Dispersionswerten oder nachausgeglichenen chromatischen Dispersionswerten;
Erlangen, durch die optische Signalempfangsvorrichtung (204) in der ersten Iteration, eines ersten Signals und eines zweiten Signals basierend auf den mindestens zwei ausgeglichenen chromatischen Dispersionswerten; wobei das erste Signal ein erstes abgeleitetes Signal des neuen Signals ist und das zweite Signal ein zweites abgeleitetes Signal des neuen Signals ist.

12. Verfahren (100) nach Anspruch 11, wobei das Verfahren (100) basierend auf der Auswahl des zweiten Betriebsmodus ferner Folgendes umfasst:

Erzeugen, durch die optische Signalempfangsvorrichtung (204) in der ersten Iteration, eines ersten Leistungsspektrums, das dem ersten Signal zugeordnet ist, und eines zweiten Leistungsspektrums, das dem zweiten Signal zugeordnet ist; und
Bestimmen, durch die optische Signalempfangsvorrichtung (204) in der ersten Iteration, eines ersten Satzes von Frequenzwerten, der Frequenzeinbrüchen in dem ersten Leistungsspektrum entspricht, und eines zweiten Satzes von Frequenzwerten, der Frequenzeinbrüchen in dem zweiten Leistungsspektrum entspricht.

13. Verfahren (100) nach Anspruch 12, wobei das Verfahren (100) basierend auf der Auswahl des zweiten Betriebsmodus ferner Folgendes umfasst:

Bestimmen, durch die optische Signalempfangsvorrichtung (204), in der Vielzahl von Iterationen, einer Vielzahl chromatischer Dispersionswerte basierend auf den bereitgestellten mindestens zwei ausgeglichenen chromatischen Dispersionswerten, dem bestimmten ersten Satz von Frequenzwerten und dem bestimmten zweiten Satz von Frequenzwerten in jeder Iteration der Vielzahl von Iterationen;
Eliminieren, durch die optische Signalempfangsvorrichtung (204), eines oder mehrerer chromatischer Dispersionswerte aus der ermittelten Vielzahl chromatischer Dispersionswerte, der/die eine größere Abweichung von dem durchschnittlichen chromatischen Dispersionswert als ein definierter Schwellenwert aufweist/aufweisen; und
Bestimmen, durch die optische Signalempfangsvorrichtung (204), eines repräsentativen chromatischen Dispersionswerts, der für die bestimmte Vielzahl chromatischer Dispersionswerte nach der Eliminierung repräsentativ ist.

14. Optische Signalempfangsvorrichtung (204) zum Bestimmen einer chromatischen Dispersion in einer optischen Verbindung (206), umfassend:
einen Steuerungsschaltkreis, der zu Folgendem konfiguriert ist:

Empfangen eines Signals über die optische Verbindung (206) aus einer optischen Signalübertragungsvorrichtung (202);

Schätzen einer ersten chromatischen Dispersion des empfangenen Signals basierend auf mindestens einem Frequenzeinbruch, dessen Frequenz aus einem Leistungsspektrum erlangt wird, das dem empfangenen Signal zugeordnet ist;

Bereitstellen, basierend auf der geschätzten ersten chromatischen Dispersion, eines Satzes chromatischer Dispersionswerte an einen chromatischen Dispersionserzeugungsschaltkreis (212, 220), um einen Satz von Signalen zu erlangen; und

Bestimmen einer zweiten chromatischen Dispersion basierend auf dem bereitgestellten Satz chromatischer Dispersionswerte, dem Leistungsspektrum, das dem empfangenen Signal zugeordnet ist, und einem Satz von Leistungsspektren, der dem erlangten Satz von Signalen zugeordnet ist.

15. Computerprogrammprodukt, umfassend ein nichttransitorisches, computerlesbares Speichermedium, das darauf gespeicherte computerlesbare Anweisungen aufweist, wobei die computerlesbaren Anweisungen durch ein computergestütztes Gerät, das in einem Steuerungsschaltkreis der optischen Empfangsvorrichtung nach Anspruch 14 umfasst ist, ausführbar sind, wobei das computergestützte Gerät eine Verarbeitungshardware umfasst, um ein Verfahren (100) nach einem der Ansprüche 1 bis 13 auszuführen.

## Revendications

1. Procédé (100) de détermination de la dispersion chromatique dans une liaison optique (206) au niveau d'un appareil de réception de signal optique (204), le procédé (100) comprenant :

   la réception, par l'appareil de réception de signal optique (204), d'un signal par l'intermédiaire de la liaison optique (206) en provenance d'un appareil de transmission de signal optique (202) ;

   l'estimation, par l'appareil de réception de signal optique (204), d'une première dispersion chromatique du signal reçu sur la base d'au moins un creux de fréquence, dont la fréquence est obtenue à partir d'un spectre de puissance associé au signal reçu ;

   la fourniture, par l'appareil de réception de signal optique (204), sur la base de la première dispersion chromatique estimée, d'un ensemble de valeurs de dispersion chromatique à un circuit de génération de dispersion chromatique (212, 220) pour obtenir un ensemble de signaux ; et

   la détermination, par l'appareil de réception de signal optique (204), d'une seconde dispersion chromatique sur la base de l'ensemble fourni de valeurs de dispersion chromatique, du spectre de puissance associé au signal reçu, et d'un ensemble de spectres de puissance associés à l'ensemble de signaux obtenu.

2. Procédé (100) selon la revendication 1, comprenant également la sélection, par l'appareil de réception de signal optique (204), d'une valeur de dispersion chromatique pré-compensée associée au signal reçu pour l'estimation de la première dispersion chromatique du signal reçu.

3. Procédé (100) selon la revendication 1 ou 2, comprenant également la génération, par l'appareil de réception de signal optique (204), du spectre de puissance pour le signal reçu sur la base d'une conversion du signal reçu dans un domaine de fréquence, dans lequel le spectre de puissance généré est une distribution d'une densité spectrale de puissance du signal reçu dans le domaine de fréquence, et dans lequel chacun de l'ensemble de spectres de puissance est une distribution d'une densité spectrale de puissance dans le domaine de fréquence correspondant à chacun de l'ensemble de signaux obtenu.

4. Procédé (100) selon l'une quelconque des revendications précédentes, dans lequel la détermination de la seconde dispersion chromatique comprend la détermination, par l'appareil de réception de signal optique (204), d'un ensemble de pentes à partir de l'ensemble de spectres de puissance associés à l'ensemble de signaux obtenu.

5. Procédé (100) selon la revendication 4, dans lequel la détermination de la seconde dispersion chromatique comprend également la comparaison, par l'appareil de réception de signal optique (204), d'une pente associée au spectre de puissance du signal reçu avec chaque pente de l'ensemble de pentes associées à l'ensemble de spectres de puissance de l'ensemble de signaux obtenu.

6. Procédé (100) selon la revendication 5, dans lequel la détermination de la seconde dispersion chromatique comprend également l'identification, par l'appareil de réception de signal optique (204), sur la base de la comparaison, d'une pente de l'ensemble de pentes ayant une différence de pente minimale avec la pente associée au signal reçu, dans lequel la seconde dispersion chromatique déterminée est une valeur de dispersion chromatique de l'ensemble fourni de valeurs de dispersion chromatique qui correspond à la pente identifiée ayant la différence de pente minimale (306).

7. Procédé (100) selon l'une quelconque des revendications précédentes, dans lequel le circuit de génération de dispersion chromatique (212, 220) est fourni au niveau de l'un quelconque des éléments suivants : l'appareil de réception de signal optique (204) ; ou l'appareil de transmission de signal optique (202) lorsque le signal reçu est fourni en retour à l'appareil de transmission de signal optique (202).

8. Procédé (100) selon l'une quelconque des revendications précédentes, comprenant également la fourniture, par l'appareil de réception de signal optique (204), de la seconde dispersion chromatique déterminée à un circuit de compensation de dispersion chromatique (214), dans lequel la seconde dispersion chromatique déterminée est utilisée par le circuit de compensation de dispersion chromatique (214) pour une pré-compensation de la dispersion chromatique dans la liaison optique (206), dans lequel le circuit de compensation de dispersion chromatique (214) est fourni au niveau de l'appareil de transmission de signal optique (202) pour la pré-compensation.

9. Procédé (100) selon l'une quelconque des revendications précédentes 1 à 7, comprenant également l'utilisation, par un circuit de compensation de dispersion chromatique (222) de l'appareil de réception de signal optique (204), de la seconde dispersion chromatique déterminée pour une post-compensation de la dispersion chromatique dans la liaison optique (206).

10. Procédé (100) selon la revendication 1, comprenant également la sélection, par l'appareil de réception de signal optique (204), d'au moins l'un parmi un premier mode opérationnel ou un second mode opérationnel d'une pluralité de modes opérationnels pour la détermination de la dispersion chromatique dans la liaison optique (206), dans lequel au moins des opérations qui comprennent l'estimation de la première dispersion chromatique, la fourniture de l'ensemble de valeurs de dispersion chromatique et la détermination de la seconde dispersion chromatique sont exécutées sur la base de la sélection du premier mode opérationnel.

11. Procédé (100) selon la revendication 10, dans lequel, sur la base de la sélection du second mode de fonctionnement, le procédé (100) comprend également :
la sélection, par l'appareil de réception de signal optique (204) dans une première itération d'une pluralité d'itérations, d'au moins deux valeurs de dispersion chromatique compensées pour un nouveau signal transmis par l'appareil de transmission de signal optique (202), dans lequel les au moins deux valeurs de dispersion chromatique compensées sont au moins l'une parmi :

des valeurs de dispersion chromatique pré-compensées ou des valeurs de dispersion chromatique post-compensées ;
l'obtention, par l'appareil de réception de signal optique (204) dans la première itération, d'un premier signal et d'un second signal sur la base des au moins deux valeurs de dispersion chromatique compensées ; où le premier signal est un premier signal dérivé du nouveau signal, et le second signal est un second signal dérivé du nouveau signal.

12. Procédé (100) selon la revendication 11, dans lequel, sur la base de la sélection du second mode de fonctionnement, le procédé (100) comprend également :

la génération, par l'appareil de réception de signal optique (204) dans la première itération, d'un premier spectre de puissance associé au premier signal et d'un second spectre de puissance associé au second signal ; et
la détermination, par l'appareil de réception de signal optique (204) dans la première itération, d'un premier ensemble de valeurs de fréquence qui correspond à des creux de fréquence dans le premier spectre de puissance et d'un second ensemble de valeurs de fréquence qui correspond à des creux de fréquence dans le second spectre de puissance.

13. Procédé (100) selon la revendication 12, dans lequel, sur la base de la sélection du second mode de fonctionnement, le procédé (100) comprend également :

la détermination, par l'appareil de réception de signal optique (204), dans la pluralité d'itérations, d'une pluralité de valeurs de dispersion chromatique sur la base des au moins deux valeurs de dispersion chromatique compensées fournies, du premier ensemble déterminé de valeurs de fréquence et du second ensemble déterminé de valeurs de fréquence dans chaque itération de la pluralité d'itérations ;

l'élimination, par l'appareil de réception de signal optique (204), d'une ou de plusieurs valeurs de dispersion chromatique de la pluralité déterminée de valeurs de dispersion chromatique qui ont un écart par rapport à la valeur de dispersion chromatique moyenne supérieur à un seuil défini ; et

la détermination, par l'appareil de réception de signal optique (204), d'une valeur de dispersion chromatique représentative qui est représentative de la pluralité déterminée de valeurs de dispersion chromatique après l'élimination.

14. Appareil de réception de signal optique (204) permettant de déterminer la dispersion chromatique dans une liaison optique (206), comprenant :

un circuit de commande qui est configuré pour :

recevoir un signal par l'intermédiaire de la liaison optique (206) en provenance d'un appareil de transmission de signal optique (202) ;

estimer une première dispersion chromatique du signal reçu sur la base d'au moins un creux de fréquence, dont la fréquence est obtenue à partir d'un spectre de puissance associé au signal reçu ;

fournir, sur la base de la première dispersion chromatique estimée, un ensemble de valeurs de dispersion chromatique à un circuit de génération de dispersion chromatique (212, 220) pour obtenir un ensemble de signaux ; et

déterminer une seconde dispersion chromatique sur la base de l'ensemble fourni de valeurs de dispersion chromatique, du spectre de puissance associé au signal reçu et d'un ensemble de spectres de puissance associés à l'ensemble de signaux obtenu.

15. Produit de programme informatique comprenant un support de stockage non transitoire lisible par ordinateur sur lequel sont stockées des instructions lisibles par ordinateur, les instructions lisibles par ordinateur étant exécutables par un dispositif informatisé compris dans un circuit de commande de l'appareil de réception optique selon la revendication 14, le dispositif informatisé comprenant un matériel de traitement pour exécuter un procédé (100) selon l'une quelconque des revendications 1 à 13.

FIG. 1

FIG. 2A

202

TOSA
210

CD GENERATION
CIRCUIT
212

CD COMPENSATION
CIRCUIT
214

CONTROL
CIRCUITRY
208

FIG. 2B

204

ROSA
218

CD GENERATION
CIRCUIT
220

CD COMPENSATION
CIRCUIT
222

CONTROL
CIRCUITRY
216

FIG. 2C

FIG. 3A

FIG. 3B

FIG. 4A

EP 4 107 878 B1

FIG. 4B

FIG. 5A

FIG. 5B

FIG. 5C

## REFERENCES CITED IN THE DESCRIPTION

**Patent documents cited in the description**

- JP 2010010752 A